Europäisches Patentamt

European Patent Office

Office européen des brevets

(19)

(11) **EP 0 814 902 B1**

(12) **FASCICULE DE BREVET EUROPEEN**

(45) Date de publication et mention
de la délivrance du brevet:
**19.09.2001 Bulletin 2001/38**

(21) Numéro de dépôt: **96908166.0**

(22) Date de dépôt: **21.03.1996**

(51) Int Cl.7: **B01J 19/00**, G05D 23/19

(86) Numéro de dépôt international:
**PCT/FR96/00426**

(87) Numéro de publication internationale:
**WO 96/30118 (03.10.1996 Gazette 1996/44)**

(54) **PROCEDE DE CONTROLE THERMIQUE D'UN REACTEUR DISCONTINU POLYVALENT A PARTIR D'UNE PLURALITE DE SOURCES DE FLUIDES THERMIQUES, ET DISPOSITIF DE MISE EN OEUVRE DE CE PROCEDE**

VERFAHREN UND ANLAGE FÜR DIE THERMISCHE REGELUNG VON CHARGEN-REAKTOREN AUSGEHEND VON EINER MEHRZAHL VON QUELLEN VON WÄRMETRANSPORTFLÜSSIGKEITEN

MULTI-PURPOSE BATCH REACTOR THERMAL CONTROL METHOD USING A PLURALITY OF THERMAL FLUID SOURCES AND DEVICE FOR IMPLEMENTING SAID PROCESS

(84) Etats contractants désignés:
**DE ES FR GB IT NL**

(30) Priorité: **24.03.1995 FR 9503753**

(43) Date de publication de la demande:
**07.01.1998 Bulletin 1998/02**

(73) Titulaire: **INSTITUT NATIONAL POLYTECHNIQUE DE TOULOUSE (I.N.P.T.)**
**31000 Toulouse (FR)**

(72) Inventeurs:
• **CABASSUD, Michel**
  **F-31650 Saint-Orens (FR)**
• **CHAMAYOU, Alain**
  **F-81100 Castres (FR)**
• **POLLINI, Lucien**
  **F-31410 Noe (FR)**
• **LOULEH, Ziad**
  **F-31018 Toulouse Cédex (FR)**

• **LE LANN, Marie-Véronique**
  **F-31410 Mauzac (FR)**
• **CASAMATTA, Gilbert**
  **F-31300 Toulouse (FR)**

(74) Mandataire:
**Cabinet BARRE LAFORGUE & associés**
**95, rue des Amidonniers**
**31000 Toulouse (FR)**

(56) Documents cités:
**EP-A- 0 400 829          EP-A- 0 516 037**
**DE-A- 4 105 404          FR-A- 2 632 718**
**US-A- 4 744 408**

• **PATENT ABSTRACTS OF JAPAN vol. 14, no. 68 (C-686) [4011] , 8 Février 1990 & JP,A,01 288332 (KANEGAFUCHI CHEM IND CO LTD), 20 Novembre 1989,**

**Description**

L'invention concerne un procédé de contrôle thermique d'un réacteur discontinu polyvalent tel qu'un réacteur destiné à l'industrie de la chimie fine de préparation ou de transformation de produits pharmaceutiques, cosmétiques, colorants, ..., ou à l'industrie de la fabrication des polymères, ainsi qu'un dispositif de contrôle thermique d'un tel réacteur pour la mise en oeuvre de ce procédé.

Le contrôle thermique d'un réacteur consiste à réguler la température du milieu réactionnel au sein du réacteur au cours du temps. On désigne dans toute la présente demande par "réacteur discontinu", tout réacteur dans lequel on place un milieu dénommé "milieu réactionnel" pendant un temps de séjour lors duquel une réaction ou toute autre opération physique et/ou chimique (extraction, séparation, mélange, ...) se développe, et on recueille les produits de la réaction ou de ladite opération à la fin du temps de séjour. Le terme "réacteur discontinu" inclut donc les réacteurs et les autres dispositifs mélangeurs, extracteurs, séparateurs, ... discontinus ou semi-continus. Le terme "réaction" désigne de façon générale toute opération effectuée dans le réacteur.

Les réacteurs discontinus sont largement utilisés dans l'industrie de la chimie fine pour la préparation ou la transformation de produits divers tels que les produits pharmaceutiques, cosmétiques, colorants, ou autres et dans l'industrie de la fabrication des polymères. En général, les réacteurs utilisés doivent être polyvalents, c'est-à-dire non dédiés à une réaction déterminée ou à une catégorie particulière de réactions. Néanmoins, pour assurer la qualité des produits et la reproductibilité des procédés chimiques, les réacteurs doivent être contrôlés du point de vue thermique de façon précise.

Or, les procédés de contrôle thermique de tels réacteurs posent encore divers problèmes. Tout d'abord, le procédé doit être polyvalent, comme le réacteur, c'est-à-dire applicable avec la même efficacité quelle que soit la réaction ou l'opération physique et/ou chimique à contrôler dans le réacteur. Egalement, dans les procédés discontinus, les procédures de démarrage et d'interruption sont fréquentes, et la réaction chimique à l'intérieur du réacteur peut subir ou nécessiter des modifications fréquentes des paramètres thermiques. Le procédé doit donc être aussi flexible.

On connaît déjà trois principaux types de procédé de contrôle thermique de tels réacteurs (cf. "Adaptive control of a multipurpose and flexible semi-batch pilot plant reactor" Rafalimanana et al., Computers Chemical Engineering - Vol. 16, n° 9 pages 837-848 - 1992).

Le premier type de procédé connu dit "monofluide" consiste à faire circuler un fluide thermique unique, en général obtenu à partir d'une seule source principale de fluide, à l'intérieur d'une double enveloppe du réacteur selon un débit constant et à ajuster la température de ce fluide grâce à des échangeurs et/ou des injections de ce fluide chaud ou froid dans le circuit (voir par exemple DE-A-4 105 404 ; EP-A-0 516 037 ; US-A-4 744 408). Le problème qui se pose alors est celui du choix et de la mise au point du fluide thermique à utiliser.

En effet, ce fluide doit pouvoir être porté à des températures très différentes (classiquement de - 20° C à 200° C ou plus) en conservant ses propriétés thermiques. De plus, les fluides caloporteurs organiques parfois utilisés sont toxiques, inflammables et visqueux à froid. Egalement, le transfert thermique est de médiocre qualité et dépend de la température. Lorsque l'on utilise un fluide aqueux, l'installation comporte en général une boucle décentralisée avec un échangeur électrothermique simple ou double flux. Le contrôle thermique du réacteur nécessite alors une installation lourde, sophistiquée, complexe, dont le coût est important et dont la logique de pilotage est mal maîtrisée, notamment si le réacteur est polyvalent.

Le deuxième type de contrôle thermique connu consiste à faire circuler un fluide chaud dans une double enveloppe et un fluide froid dans un serpentin immergé dans le réacteur. Le contrôle de la température est assuré en agissant sur l'un et/ou l'autre des débits du fluide chaud et du fluide froid. Néanmoins, un tel procédé nécessite une installation complexe et onéreuse compte-tenu de la nécessité de prévoir à la fois un serpentin et une double enveloppe. Egalement, un tel procédé induit une dépense d'énergie prohibitive qui en limite l'application aux expériences de laboratoire. Ainsi, ces procédés du deuxième type ne sont pas utilisés en pratique avec les réacteurs de taille industrielle.

Le troisième type de procédé de contrôle thermique connu, le plus répandu, dit "multifluide", consiste à faire circuler dans une double enveloppe du réacteur alternativement et directement l'un des fluides thermiques froid ou chaud disponible sur le site, chaque fluide étant fourni par une source distincte à température prédéterminée (voir par exemple FR-A-2 632 718 ou EP-A-0 400 829). Le contrôle thermique du réacteur est obtenu en choisissant pour chaque phase de la réaction, le fluide thermique approprié, et en agissant sur son débit à l'intérieur du circuit de la double enveloppe.

Les procédés multifluides présentent de nombreux inconvénients. Ainsi, les réglages du débit en fonctionnement et plus généralement la gestion dynamique du procédé, sont délicats et complexes. En effet, les coefficients d'échange thermique dépendent des caractéristiques de l'écoulement du fluide, de sorte que la corrélation entre les choix retenus à chaque phase de la réaction quant à la nature du fluide utilisé et à son débit et les effets produits par ces choix, dépend de nombreux facteurs et est difficile à maîtriser.

De plus, il est nécessaire de purger complètement le circuit de la double enveloppe à chaque changement d'un fluide à un autre non miscible (c'est-à-dire que l'on ne souhaite pas mélanger) avec le précédent. Or, ces purges intégrales fréquentes du circuit de contrôle thermique affectent la réaction en cours dans le réacteur, limitent considérablement les performances dynamiques du procédé, et diminuent le rapport de la durée totale des réactions effectuées dans le réacteur sur la durée totale de non fonctionnement du réacteur.

L'invention vise à pallier ces inconvénients en proposant un nouveau type de procédé de contrôle thermique des réacteurs discontinus, qui présente tout à la fois les avantages des procédés multifluides (possibilité d'utiliser des fluides thermiques non spécifiques disponibles sur le site, par exemple de l'eau liquide à température ambiante, de l'eau glycolée ou de la saumure et de la vapeur d'eau), et ceux des procédés monofluides (performances dynamiques élevées, continuité thermique du contrôle, ...).

L'invention vise également à proposer un tel procédé dans lequel il n'est pas nécessaire de purger le circuit de contrôle thermique dans les phases de fonctionnement les plus courantes du réacteur. L'invention vise également à proposer un tel procédé dont la logique de pilotage est simple et peut être aisément maîtrisée.

L'invention vise également à proposer un tel procédé pouvant être mis en oeuvre avec un dispositif simple et peu onéreux.

L'invention vise également à proposer un dispositif pour la mise en oeuvre d'un tel procédé.

L'invention vise en outre à proposer un tel procédé et un tel dispositif qui sont compatibles avec les contraintes économiques et pratiques de l'industrie, et notamment qui peuvent être utilisés avantageusement avec des réacteurs de taille industrielle.

Dans toute la présente demande deux fluides thermiques sont dits "distincts" dès lors qu'ils sont, soit de compositions chimiques différentes, soit dans des états physiques (liquide ou gazeux) différents.

L'invention concerne donc un procédé de contrôle thermique conforme à la revendication 1.

Selon l'invention, on active le premier mode de contrôle (ajustement du débit) lorsque le fluide de contrôle Fc est constitué d'un seul fluide thermique Fi. Et on active le deuxième mode de contrôle (ajustement de la température et débit maintenu au-dessus d'une valeur prédéterminée) lorsque le fluide de contrôle Fc est constitué ou peut être constitué d'un mélange de plusieurs fluides thermiques Fi de températures Ti distinctes, et on ajuste la température du fluide de contrôle Fc en ajustant le débit d'au moins l'un des fluides thermiques Fj constituant le mélange, le débit d'au moins un autre fluide thermique Fi, à l'état liquide, étant maintenu supérieur à une valeur prédéterminée.

En outre, selon l'invention, on sélectionne en temps réel et en fonctionnement le(les) fluide(s) thermique(s) Fi constituant le fluide de contrôle Fc en fonction du signal de commande R, de façon à minimiser le nombre de changements de fluide(s) thermique(s) Fi au cours du procédé.

Ainsi, un procédé selon l'invention est du type multifluide en ce sens qu'on utilise une pluralité de sources, à savoir en général les sources de fluides thermiques distincts généralement disponibles sur le site industriel concerné, mais également du type monofluide dans la mesure où le contrôle thermique est effectué à débit constant et par ajustement de la température du fluide de contrôle Fc lorsque le deuxième mode de contrôle est actif, notamment pendant la majeure partie de la réaction.

En particulier, avantageusement et selon l'invention, pendant la majeure partie de la durée de la réaction, on sélectionne un mélange de plusieurs fluides thermiques Fi distincts miscibles (par exemple de l'eau et de la vapeur) de températures Ti distinctes, pour former le fluide de contrôle Fc et on active le deuxième mode de contrôle en ajustant la température du mélange, de sorte que le nombre de changements de sélection et de modes de contrôle est minimisé. En outre, on bénéficie, pour la plus grande partie du temps de réaction, des avantages d'un contrôle thermique de type monofluide.

Avantageusement et selon l'invention, on sélectionne le(les) fluide(s) thermique(s) Fi constituant le fluide de contrôle Fc selon une sélection choisie dans un groupe de sélections possibles comprenant au moins les trois sélections distinctes suivantes :

- un fluide thermique F1 froid uniquement,
- un fluide thermique F3 chaud uniquement,
- un fluide thermique F2 tiède liquide de débit constant mélangé à un débit ajustable d'au moins un autre fluide thermique Fj de température Tj distincte de celle T2 du fluide thermique F2 tiède, de sorte que la température Te du fluide de contrôle Fc est ajustée selon le deuxième mode de contrôle, par ajustement du débit utilisé du fluide thermique Fj. Avantageusement et selon l'invention, on utilise dans cette dernière sélection, le fluide thermique F3 chaud et/ou le fluide thermique F1 froid mélangé au fluide thermique F2 tiède.

Avantageusement et selon l'invention, le fluide thermique F2 tiède est un liquide principalement constitué d'eau liquide, notamment à température ambiante, et on utilise de la vapeur d'eau à titre de fluide thermique mélangé au fluide thermique F2 tiède. En outre, cette vapeur d'eau fait aussi office de fluide thermique F3 chaud (première sélection sus-mentionnée) utilisé seul pour former le fluide de contrôle Fc lorsque la puissance calorifique de celui-ci doit être élevée.

Il est à noter que, lorsque le fluide de contrôle Fc est constitué du mélange d'eau liquide tiède F2 et de vapeur d'eau F3 (contrôle selon le deuxième mode), si le signal de commande R évolue au-delà de la borne extrême (en général la borne supérieure Rb), correspondant à la puissance calorifique maximum du fluide de contrôle Fc formé par ce mélange, il n'est pas nécessaire de purger le circuit de contrôle thermique pour passer à la sélection dans laquelle la vapeur d'eau F3 est utilisée seule (selon le premier mode de contrôle). Il suffit en effet d'interrompre l'introduction de l'eau dans le circuit.

En outre, dans le cas où la sélection active est le fluide thermique F1 froid seul (qui est par exemple de l'eau glycolée ou de la saumure à basse température), si le signal de commande R évolue au-delà de la borne extrême (en général, la borne inférieure Ra) correspondant à la puissance calorifique minimum (ou à la puissance frigorifique maximum) procurée par le débit nominal Q1n délivré par la source S1 de ce fluide F1, on ne change pas de sélection ni de mode de contrôle puisqu'il n'existe pas de sélection procurant la puissance calorifique appropriée à ce signal de commande R. Il en va de même dans le cas où la sélection active est le fluide thermique F3 chaud seul si le signal de commande R évolue au-delà de la borne extrême (en général borne supérieure Rb) correspondant à la puissance calorifique maximum procurée par le débit nominal Q3n délivré par la source S3 de ce fluide F3.

Avantageusement, dans un procédé selon l'invention :

- on mesure en temps réel la température Trm régnant à l'intérieur du réacteur, la température Tem du fluide de contrôle Fc à l'entrée du circuit de contrôle thermique, la température Tsm du fluide de contrôle Fc à la sortie du circuit de contrôle thermique,
- on fournit les valeurs mesurées de ces températures Trm, Tem, Tsm à des moyens formant régulateur aptes à élaborer en temps réel un signal électrique de régulation dont la valeur dépend du signal de consigne C qu'il reçoit, desdites valeurs mesurées, et de l'évolution de ces valeurs au cours du temps,
- et on utilise directement le signal électrique de régulation élaboré par le régulateur à titre de signal de commande R.

Par exemple, le signal de commande R est le signal électrique de régulation fournit par un régulateur PID standard ou auto-ajustable.

Dans un procédé selon l'invention, on purge le circuit de contrôle thermique uniquement lorsque le signal de commande R évolue en passant par une des bornes extrêmes Ra et/ou Rb de l'intervalle [Ra, Rb] du signal de commande correspondant à la sélection en cours de fluide(s) thermique(s) Fi constituant le fluide de contrôle Fc, et lorsque cette valeur du signal de commande R nécessite l'utilisation d'une sélection de fluide(s) non miscibles (c'est-à-dire que l'on ne souhaite pas mélanger) avec la sélection de fluide(s) active. Ainsi, on diminue considérablement le nombre de purges nécessaires.

Par ailleurs, avantageusement selon l'invention, on utilise directement la valeur élaborée en temps réel du signal de commande R pour ajuster automatiquement la puissance calorifique du fluide de contrôle Fc à l'entrée du circuit de contrôle thermique.

Si l'on considère le signal de commande élaboré par le régulateur comme représentatif du flux thermique devant être échangé, on calcule en temps réel, c'est-à-dire à chaque période d'échantillonnage, pour la sélection de fluide(s) en cours, et de préférence pour chacune des sélections possibles, le flux minimum (correspondant à la borne inférieure Ra) et le flux maximum (correspondant à la borne supérieure Rb) pouvant être échangés compte tenu des caractéristiques du (des) fluide (s) (débits, températures, propriétés physiques...) constituant ladite sélection en cours, de la température mesurée Trm du milieu réactionnel, des coefficients d'échange thermique du réacteur et de sa géométrie. En fonction de ces valeurs extrêmes du flux, on détermine si la valeur courante du signal R est entre ces valeurs. Dans l'affirmative, il est possible de conserver la même sélection de fluide(s), puis on calcule, selon le mode de contrôle retenu, en temps réel, l'ajustement à effectuer pour atteindre la valeur de consigne. Dans la négative, on modifie la sélection de fluide(s), pour autant qu'il existe une sélection permettant de procurer le flux thermique correspondant à la valeur du signal de commande R, puis on procède au calcul de l'ajustement à effectuer.

Un procédé de contrôle thermique selon l'invention peut faire aussi l'objet de deux variantes selon que l'on recycle ou non le fluide de contrôle Fc circulant dans le circuit de contrôle thermique.

Dans une première variante on évacue hors du circuit de contrôle thermique la totalité du fluide de contrôle Fc à la sortie du circuit de contrôle thermique.

Dans une deuxième variante, on recycle au moins partiellement un débit Qr de fluide de contrôle Fc.

Il est à noter que dans un procédé selon l'invention, lorsque le deuxième mode de contrôle est actif, le débit de liquide dans le circuit de contrôle thermique reste supérieur à un débit prédéterminé et les coefficients d'échange thermique entre le fluide de contrôle Fc et le réacteur restent sensiblement constants, et en tout cas maîtrisés. On peut ainsi améliorer la précision et la dynamique du contrôle thermique. Avantageusement et selon l'invention lorsque le deuxième mode de contrôle est actif, on maintient le débit du fluide de contrôle Fc liquide à une valeur constante. Plus exactement, dans la variante sans recyclage et lorsque la sélection active est le mélange des fluides F2 et F3, on maintient constant à sa valeur nominale Q2n le débit du fluide thermique tiède F2 à l'état liquide délivré par la source S2, et on fait varier la valeur du débit Q3e du fluide thermique chaud F3 à l'état gazeux introduit dans le circuit de contrôle thermique, pour obtenir la température Te du fluide de contrôle Fc souhaitée à l'entrée du circuit. Ainsi, pour une température Te faible correspondant à la valeur Ra minimum du signal de commande R dans l'intervalle [Ra, Rb], on n'introduit pas de fluide F3 à l'état gazeux (Q3e = 0) et le fluide thermique Fc est constitué du fluide F2 à l'état liquide à la température T2. On comprend que plus on mélange de fluide à l'état gazeux F3 à la température T3 à ce fluide F2, plus la température de la phase liquide du fluide thermique Fc augmente. Néanmoins, le fluide F3 est immédiatement condensé par mélange dans le fluide F2 liquide de sorte que le fluide de contrôle Fc conserve au moins substantiellement sa nature et son débit, seule la température étant ajustée en fonction de la valeur du signal de commande R.

Dans la variante avec recyclage, on ajuste les débits Q2e et/ou Q3e des fluides F2 et F3 pour ajuster la température Te du mélange Fc. Ainsi, on introduit du fluide F2 à l'état liquide et à la température T2 pour refroidir le fluide de contrôle Fc, et on introduit au contraire du fluide F3 à l'état gazeux à la température T3 pour augmenter la température du fluide de contrôle Fc.

L'invention concerne également un dispositif pour la mise en oeuvre du procédé selon l'invention.

Ainsi, l'invention concerne un dispositif de contrôle thermique conforme à la revendication 12.

Avantageusement et selon l'invention, les moyens de détermination comportent des moyens formant régulateur adaptés pour élaborer en temps réel un signal électrique de commande R dont la valeur dépend d'un signal de consigne C pour la température Tr du milieu réactionnel dont la valeur et l'évolution sont prédéterminées, et d'au moins la valeur mesurée Trm de la température du milieu réactionnel et de l'évolution de cette valeur au cours du temps.

Avantageusement et selon l'invention, le dispositif comprend en outre :

- des moyens de mesure en temps réel de la température Tem du fluide de contrôle Fc à l'entrée du circuit de contrôle thermique,
- des moyens de mesure en temps réel de la température Tsm du fluide de contrôle Fc à la sortie du circuit de contrôle thermique.

Avantageusement et selon l'invention, les moyens formant régulateur sont adaptés pour élaborer en temps réel le signal de commande R en fonction du signal de consigne C, des valeurs mesurées Trm, Tem, Tsm, délivrées par lesdits moyens de mesure et de l'évolution de ces valeurs au cours du temps.

Avantageusement, et selon l'invention, le dispositif comporte un manifold interposé entre les différentes sources Si et le circuit de contrôle thermique, et ce manifold comprend pour chaque source Si, une vanne de réglage proportionnel du débit Qie de fluide thermique Fi introduit dans le circuit de contrôle thermique entre une valeur nulle et la valeur maximum correspondant au débit nominal Qin du fluide thermique Fi délivré par la source Si. Avantageusement, les moyens de détermination sont adaptés pour élaborer un signal d'ajustement d'ouverture de chaque vanne du manifold en fonction de la valeur du signal de commande R élaborée par les moyens formant régulateur.

Ainsi, le dispositif selon l'invention est particulièrement simple, peu onéreux et fiable.

L'invention concerne aussi un procédé et un dispositif comprenant en combinaison tout ou partie des caractéristiques mentionnées ci-après ou ci-dessus.

D'autres caractéristiques et avantages de l'invention apparaîtront à la lecture de la description suivante, de ses modes de réalisation préférentiels donnés à titre d'exemple non limitatif, et qui se réfère aux figures annexées dans lesquelles :

- la figure 1 est un schéma de principe d'un dispositif selon une première variante de l'invention où le fluide thermique Fc n'est pas recyclé,
- les figures 2a à 2c sont des logigrammes illustrant les étapes d'un procédé selon la première variante de l'invention,
- la figure 3 est un schéma de principe d'un dispositif selon une deuxième variante de l'invention où le fluide thermique Fc est au moins partiellement recyclé,
- la figure 4 est un diagramme illustrant des courbes de variations au cours du temps du profil de consigne et de la température mesurée Trm du milieu réactionnel, obtenues par simulation informatique d'un procédé selon l'invention,
- la figure 5 est un diagramme illustrant les variations au cours du temps des flux thermiques maximum et minimum véhiculés par les fluides thermiques et du signal de commande R représentant le flux thermique à échanger entre le milieu réactionnel et le fluide de contrôle Fc, obtenues par simulation informatique d'un procédé selon l'invention,
- la figure 6 est un diagramme illustrant un exemple de variations des valeurs extrêmes Ra et Rb du signal de commande, pour chaque sélection, en fonction de la température Trm mesurée dans le réacteur,
- les figures 7 et 8 sont des figures similaires aux figures 4 et 5 obtenues expérimentalement avec un dispositif conforme à la première variante de l'invention (sans recyclage),
- les figures 9 et 10 sont des figures similaires aux figures 7 et 8 obtenues expérimentalement avec un dispositif conforme à la deuxième variante de l'invention (avec recyclage),

- la figure 11 est un diagramme illustrant les variations au cours du temps des températures mesurées à l'entrée et à la sortie du circuit de contrôle thermique dans l'expérience des figures 9 et 10.

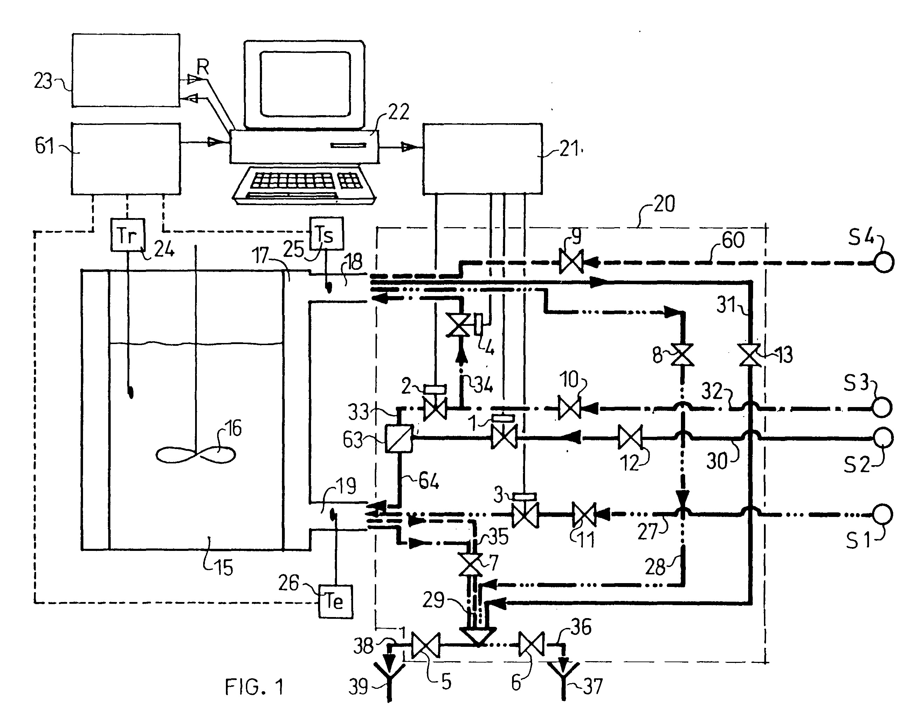

Le dispositif représenté à la figure 1 comporte un réacteur discontinu 15 en forme générale de cuve apte à contenir des produits en réaction, et doté de moyens de mélange 16. La cuve du réacteur 15 est entourée par une double enveloppe formant un circuit de contrôle thermique 17 doté de deux bouches d'alimentation/évacuation 18, 19 dont l'une 18 est à l'extrémité supérieure du circuit du contrôle thermique formé par la double enveloppe tandis que l'autre 19 est à l'extrémité opposée inférieure de ce circuit.

Une source S1 fournit un fluide thermique F1 froid, par exemple de l'eau glycolée ou de la saumure, à une température T1 qui est par exemple de l'ordre - 15° C selon un débit nominal Q1n. Une source S2 fournit un fluide thermique F2 tiède, par exemple de l'eau liquide à température T2 ambiante (par exemple de l'ordre de 20° C) selon un débit Q2n nominal. Une source S3 fournit un fluide thermique F3 chaud, par exemple de la vapeur d'eau sous pression à la température T3 et selon un débit nominal Q3n. Une source S4 fournit de l'air comprimé pour accélérer les opérations de purge du circuit 17 de la double enveloppe. Les sources de fluides S1, S2, S3, S4 peuvent être constituées d'extrémités de conduites d'un réseau d'eau glycolée ou de saumure, d'eau, de vapeur et d'air comprimé.

Le dispositif selon l'invention comporte également un manifold 20 interposé entre les sources S1, S2, S3, S4 et le circuit de contrôle thermique 17. Ce manifold 20 est composé de vannes 1 à 13 adaptées pour alimenter de façon sélective le circuit de contrôle thermique 17 en fluides F1 (eau glycolée ou saumure), et/ou F2 (eau liquide à température ambiante) et/ou F3 (vapeur d'eau) et/ou F4 (air comprimé). Les différentes vannes 1 à 13 du manifold 20 sont pilotées par une carte de commande électronique 21 élaborant des signaux électriques d'ajustement pour ces vannes. Cette carte 21 de commande est contrôlée par un dispositif informatique 22 de calcul auquel elle est reliée. Le manifold 20 comprend pour chaque source S1, S2, S3 de fluide thermique F1, F2, F3, au moins une vanne 1, 2, 3, 4 commandée de réglage proportionnel du débit Q1e, Q2e, Q3e, du fluide thermique F1, F2, F3 introduit dans le circuit de contrôle thermique 17 entre une valeur nulle et la valeur maximum correspondant au débit nominal Q1n, Q2n, Q3n du fluide thermique F1, F2, F3 délivré par la source S1, S2, S3.

Chaque circuit d'alimentation de fluide thermique F1, F2, F3 entre la source S1, S2, S3 et le circuit de contrôle thermique 17 est équipé d'un débitmètre (non représenté) dont le signal est transmis à une carte 61 d'acquisition et au dispositif informatique 22. Un manomètre (non représenté) associé à la source S3 de vapeur fournit aussi un signal électrique représentatif de la pression.

Sur la figure 1, seuls les signaux de commande pour ces vannes proportionnelles 1 à 4 sont représentés, mais il est entendu que la carte de commande 21 est également reliée aux autres vannes 5 à 13 commandées de type tout ou rien (bistables) du manifold 20.

Le dispositif selon l'invention comporte également des moyens 23 formant régulateur. Ces moyens 23 peuvent être constitués d'un régulateur électronique matériel. Ils peuvent aussi être réalisés en tout ou partie sous forme logicielle, et donc être incorporés dans le dispositif informatique 22 programmé à cet effet. Le régulateur 23 élabore un signal de commande R à partir d'un profil de consigne C représentant l'évolution au cours du temps souhaitée pour la température Tr du milieu réactionnel, et de la mesure Trm de la température du milieu réactionnel et de son évolution au cours du temps.

Avantageusement, le régulateur 23 est un régulateur PID (proportionnel intégral dérivé), ou un système de régulation et de commande avancé, par exemple du type prédictif et/ou auto-adaptatif tel que GPC. Un tel régulateur GPC tient compte de l'évolution passée et future pour élaborer le signal en temps réel, et est capable de modifier ses paramètres en temps réel en fonction des caractéristiques dynamiques du procédé.

Un tel régulateur 23 est connu en soi, et on peut utiliser par exemple le régulateur décrit dans la publication "Adaptative control of a multipurpose and flexible semi-batch pilot plant reactor", A. Rafalimanana, M. Cabassud, M. V. Le Lann, G. Casamatta, Computers Chem. Engng, Vol. 16, N° 9, Pages 837-848, 1992.

Des sondes de température 24, 25, 26 permettent de mesurer respectivement la température Trm régnant à l'intérieur du réacteur, la température du fluide thermique Fc à la bouche d'alimentation/évacuation supérieure 18 et la température du fluide thermique Fc à la bouche d'alimentation/évacuation inférieure 19. Ces sondes de température 24, 25, 26 sont reliées à une carte d'acquisition 61 à laquelle elles délivrent les signaux correspondants. Cette carte d'acquisition 61 est reliée au dispositif informatique 22 auquel elle transmet les valeurs mesurées après conversion sous forme numérique.

Le signal de commande R élaboré par les moyens 23 de régulation peut être considéré comme directement représentatif de l'ouverture d'une vanne 1, 2, 3 de contrôle du débit d'un fluide thermique introduit dans le circuit 17.

En variante préférentielle et selon l'invention, le signal de commande R élaboré est considéré comme représentatif d'un flux thermique à échanger entre le milieu réactionnel et le fluide de contrôle Fc circulant dans le circuit 17. Dans ce cas, le dispositif informatique 22 est programmé pour calculer en temps réel, en fonction de la nature du (des) fluide(s) thermique(s) sélectionné(s) pour le fluide de contrôle Fc et du signal R, la nature et la valeur du signal d'ajustement à appliquer sur le manifold 20 pour obtenir le flux thermique recherché. Ce calcul prend en compte les coefficients d'échange thermique du réacteur 15.

Le manifold 20 définit des circuits d'alimentation/évacuation de chacun des fluides F1, F2, F3, F4 entre les sources S1, S2, S3, S4 et le circuit de contrôle thermique 17.

Le dispositif informatique 22 et le régulateur 23 sont programmés pour fonctionner en temps réel de façon échantillonnée dans le temps selon une période d'échantillonnage appropriée déterminée de façon usuelle en fonction de la dynamique du procédé. Classiquement, dans le cas d'une régulation de température, la période d'échantillonnage est comprise entre 1 s et 1 min, par exemple de l'ordre de 20 s.

A chaque période d'échantillonnage, le dispositif informatique 22 et le régulateur 23 recueillent les valeurs mesurées, procèdent aux calculs décrits ci-après, élaborent le signal de commande R et le (les) signal (aux) d'ajustement pour le manifold 20 qui est (sont) appliqué (s) à la période d'échantillonnage subséquente. Ainsi, le procédé et le dispositif selon l'invention sont du type fonctionnant en temps réel.

Le circuit d'eau glycolée ou de saumure (fluide F1) comporte une conduite d'alimentation 27 qui est reliée à la source S1 en eau glycolée et, à l'opposé à la bouche inférieure 19 qui constitue la bouche d'alimentation en eau glycolée. Entre la source S1 et la bouche 19, la conduite 27 comporte une vanne tout ou rien 11 et une vanne proportionnelle 3. Une conduite d'évacuation 28 est reliée entre la bouche d'évacuation formée de la bouche supérieure 18 et une conduite commune d'évacuation 29 par l'intermédiaire d'une vanne tout ou rien 8. La vanne 3 proportionnelle permet d'ajuster le débit Q1e d'eau glycolée introduit à l'intérieur du circuit de contrôle thermique 17.

Le circuit en eau à température ambiante (fluide F2) comporte une conduite 30 d'alimentation qui est reliée à la source S2 et, à l'opposé, à un mélangeur 63 lui-même relié à la bouche d'alimentation inférieure 19 par une conduite 64 d'alimentation. La conduite 30 comporte une vanne tout ou rien 12 et une vanne proportionnelle 1. Une conduite d'évacuation 31 relie la bouche supérieure d'évacuation 18 à la conduite commune d'évacuation 29 par l'intermédiaire d'une vanne tout ou rien 13. La vanne proportionnelle 1 permet d'ajuster le débit Q2e d'eau introduit à l'entrée du circuit de contrôle thermique 17 par la bouche d'alimentation 19.

Le circuit de vapeur (fluide F3) comporte une conduite d'alimentation 32 reliée à la source S3 de vapeur et qui comprend, en aval de celle-ci, une vanne tout ou rien 10. En aval de cette vanne tout ou rien 10, la conduite 32 est dédoublée en une conduite 33 reliée par l'intermédiaire d'une vanne proportionnelle 2 au mélangeur 63 qui permet le mélange de la vapeur et de l'eau, et en une conduite 34 reliée, par l'intermédiaire d'une vanne proportionnelle 4, à la bouche d'alimentation supérieure 18.

La source S4 en air comprimé est reliée à la bouche supérieure 18 par une conduite 60 comprenant une vanne tout ou rien 9.

Une conduite d'évacuation 35 relie également la bouche inférieure 19 à la conduite commune d'évacuation 29 par l'intermédiaire d'une vanne tout ou rien 7 située en amont du raccordement des conduites d'évacuation 28 en eau glycolée et 31 en eau à température ambiante à la conduite commune 29. La conduite d'évacuation commune 29 est dédoublée à son extrémité aval opposée en une conduite 36 reliée par l'intermédiaire d'une vanne tout ou rien 6 à une évacuation indépendante 37 en eau glycolée, et en une conduite 38 reliée par l'intermédiaire d'une vanne tout ou rien 5 à une évacuation 39 à l'égout.

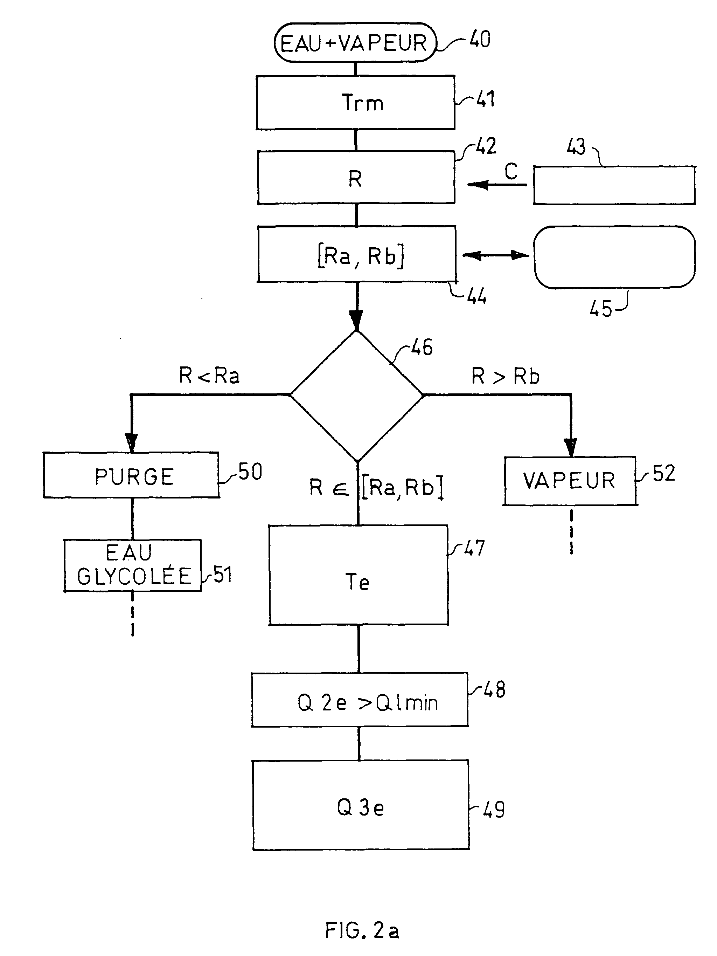

La figure 2a illustre les étapes d'un procédé de contrôle thermique selon l'invention mis en oeuvre par le dispositif de la figure 1 lorsque le fluide de contrôle Fc comprend de l'eau à température ambiante (fluide F2). Les vannes 1 et 12 d'alimentation en eau à température ambiante sont ouvertes et cet état est détecté dans l'étape 40. L'étape 41 subséquente correspond à la mesure de la température Trm à l'intérieur du réacteur 15. Le régulateur 23 élabore en temps réel (c'est-à-dire à chaque période d'échantillonnage), le signal de commande R en 42 à partir du signal de consigne C qui lui est fourni en 43 par le dispositif informatique 22. Ce dispositif informatique 22 élabore en temps réel en 44 les valeurs limites Ra et Rb de l'intervalle [Ra, Rb] dans lequel le signal de commande R peut évoluer sans changement de la sélection des fluides formant le fluide de contrôle Fc, en fonction de l'interprétation qui en est faite et du(des) fluide(s) thermique(s) constituant le fluide de contrôle Fc. Ainsi, les valeurs Ra et Rb extrêmes sont les valeurs limites pouvant être atteintes avec la sélection de fluide (s) thermique (s) en cours et avec le mode de contrôle associé. Dans le cas de la figure 2a, la sélection est un mélange d'eau (F2) et de vapeur (F3) et on ajuste la température de l'eau grâce au débit de vapeur.

Dans le cas où le signal R élaboré par le régulateur est considéré comme le flux thermique à échanger et lorsque le fluide de contrôle Fc est à l'état liquide, le calcul des valeurs Ra et Rb peut être effectué à partir des équations :

$$(I) \qquad R = Q_c\, C_p\, (T_e - T_s)$$

$$(II) \qquad R = U\, A\, [\, (T_e - T_{rm}) + (T_s - T_{rm})\, ]\, /2$$

où

Qc est le débit du fluide de contrôle Fc dans la double enveloppe ; Cp est la capacité calorifique du fluide de contrôle Fc ; Te est la température d'entrée du fluide de contrôle Fc ; Ts est la température de sortie du fluide de contrôle Fc ; U est le coefficient global d'échange thermique du réacteur déterminé par les méthodes de calcul thermique traditionnelles ; A est la surface d'échange thermique des parois ; Trm est la température mesurée du milieu réactionnel.

Pour la sélection eau + vapeur, on obtient Ra en prenant Te = T2 et Qc = Q2e, et Rb en considérant le débit de vapeur maximum (ouverture maximale de la vanne 2) avec le débit Q2e d'eau, ce qui permet de déterminer la température Te (qui est alors la température maximale du mélange eau + vapeur) et le débit Qc qui est la somme de Q2e et du débit de la vapeur condensée.

On compare ensuite en temps réel en 46 la valeur du signal de commande R élaborée en 42 aux valeurs limites Ra et Rb. Lorsque la valeur du signal de commande R est comprise dans l'intervalle [Ra, Rb] on conserve la même sélection de fluides thermiques (eau et vapeur).

Lorsque le signal de commande R est représentatif du flux thermique, on calcule en 47 à partir des équations (I) et (II) la température Te du fluide de contrôle Fc correspondant à ce flux thermique. Si l'on néglige le débit correspondant à la vapeur condensée, le calcul donne la valeur de Te directement. Si l'on ne néglige pas le débit, on procède par itérations successives.

La valeur du signal R doit correspondre d'une part à la variation de puissance calorifique entre l'entrée et la sortie du circuit 17 de la double enveloppe, (équation (I)) et d'autre part à l'échange thermique entre le milieu réactionnel et le fluide de contrôle Fc (équation (II)).

On ajuste et on maintient en 48 le débit Q2e d'eau introduit dans le circuit de contrôle thermique 17 à une valeur supérieure à une valeur Qlmin prédéterminée. Avantageusement, ce débit Q2e est maintenu égal au débit nominal Q2n délivré par la source S2 d'eau à température ambiante.

Le dispositif informatique 22 calcule à chaque période d'échantillonnage la valeur Q3e du débit de vapeur à introduire en fonction de la différence entre la température Te déterminée par calcul à partir du signal de commande R, et la température T2 de l'eau à l'entrée (étape 49). L'ajustement du débit de vapeur Q3e permet d'ajuster la température Te d'entrée du mélange formant le fluide de contrôle Fc, en fonction de la valeur du signal R.

On ajuste donc à la prochaine période d'échantillonnage la valeur du débit Q3e de vapeur introduit dans le circuit de contrôle thermique 17 en agissant sur la vanne proportionnelle 2 d'alimentation en vapeur, ce qui permet d'ajuster la température Te du fluide de contrôle Fc à l'entrée du circuit de contrôle thermique 17. Ce faisant, le débit Q3e de vapeur est mélangé au débit Q2e d'eau dans le mélangeur 63 et ce mélange est introduit à l'entrée de la bouche d'alimentation 19 inférieure.

Le fluide de contrôle Fc résultant du mélange de l'eau et de la vapeur qui sort de la bouche d'évacuation 18 après circulation dans le circuit 17 est évacué en dehors du circuit de contrôle thermique 17 par la conduite d'évacuation 31.

La valeur extrême inférieure Ra est la puissance calorifique minimum du fluide de contrôle Fc. Lorsqu'on utilise la sélection formée du mélange d'eau et de vapeur, cette valeur Ra est en pratique le flux thermique véhiculé par le débit Qlmin (notamment le débit nominal Q2n) d'eau, le débit de vapeur étant nul. La valeur extrême supérieure Rb est la puissance calorifique maximum du fluide de contrôle Fc, c'est-à-dire le flux thermique véhiculé par le mélange du débit Qlmin d'eau et d'un débit Q3e de vapeur maximum admissible pour cette sélection, correspondant en pratique par exemple à une température Te de l'ordre de 70° C pour le mélange.

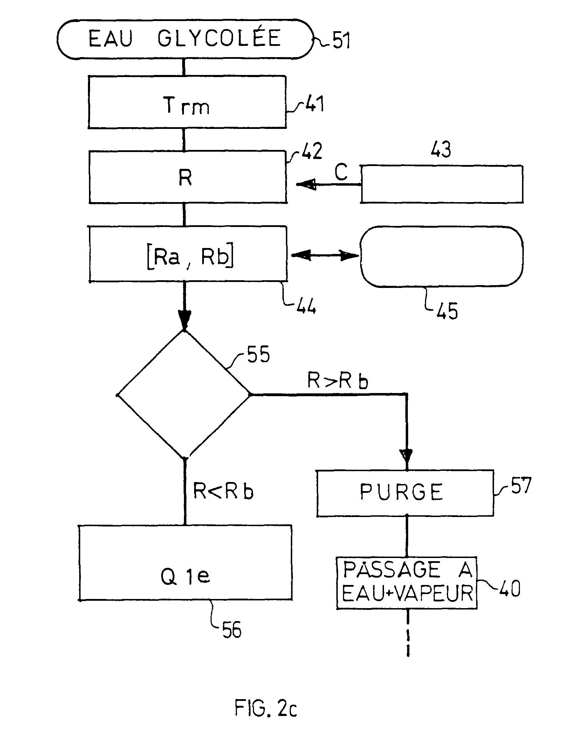

Si l'on détermine dans l'étape de comparaison 46 que la valeur du signal de commande R est inférieure à la borne inférieure Ra de l'intervalle [Ra, Rb], il est nécessaire de changer la sélection pour un fluide thermique plus froid. On effectue une étape de purge 50 du circuit de contrôle thermique 17 en fermant toutes les vannes à l'exception de la vanne 9 d'alimentation en air comprimé et des vannes 7 et 5 d'évacuation. On referme les vannes 5, 7 et 9, et on alimente ensuite le circuit de contrôle thermique en eau glycolée ou saumure conformément au procédé décrit ci-après et représenté à la figure 2c, en ouvrant les vannes 11 et 3 d'alimentation en eau glycolée et les vannes 8 et 6 d'évacuation lors de l'étape 51.

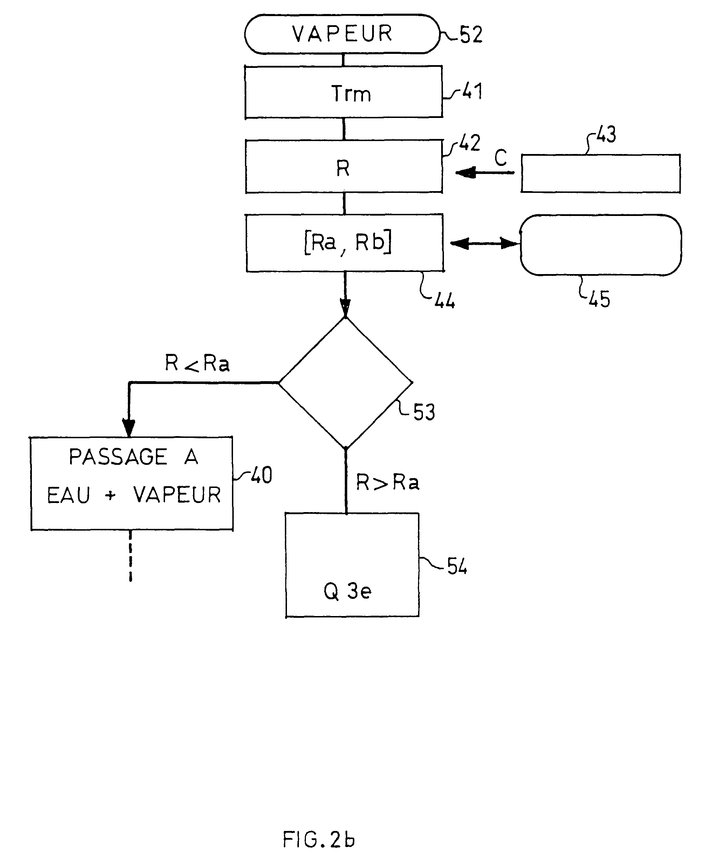

Si l'on détecte en 46 que la valeur du signal de commande R est supérieure à la borne supérieure Rb de l'intervalle [Ra, Rb], on doit aussi modifier la sélection et utiliser un fluide thermique plus chaud. Pour ce faire, on alimente le circuit de contrôle thermique 17 en vapeur uniquement en ouvrant les vannes d'alimentation 10 et 4 en vapeur dans la bouche supérieure 18 et les vannes d'évacuation 7 et 5, et en refermant les autres vannes lors de l'étape 52. On contrôle ensuite le réacteur par le procédé décrit ci-après et représenté sur la figure 2b.

Lorsque l'on détecte l'ouverture des vannes d'alimentation 10, 4 en vapeur seule (par exemple par l'étape 52), le procédé représenté figure 2b reprend les étapes 41 à 45 préalablement décrites lors desquelles on élabore à chaque instant en temps réel la valeur du signal de commande R et les bornes inférieure Ra et supérieure Rb de l'intervalle [Ra, Rb].

Avec cette sélection (vapeur seule), la borne inférieure Ra est égale à zéro, et correspond à la puissance calorifique d'un débit nul de vapeur. La borne supérieure Rb correspond à la puissance calorifique du débit nominal Q3n de vapeur seule.

Cette valeur est aussi calculée à partir des bilans thermiques qui, dans le cas de la vapeur sèche et si R est le flux thermique, s'expriment par les équations suivantes :

$$(III) \qquad R = Q3e\ L\ \sqrt{P3 - PC}$$

$$(IV) \qquad R = U\ A\ (T3 - Trm)$$

où L est la chaleur latente de condensation de la vapeur et Pc est la pression dans la double-enveloppe.
En outre, la loi d'Antoine donne :

$$(V)\ Pc = Pa + \exp [\ A - B\ /\ (T3 + C)\ ]$$

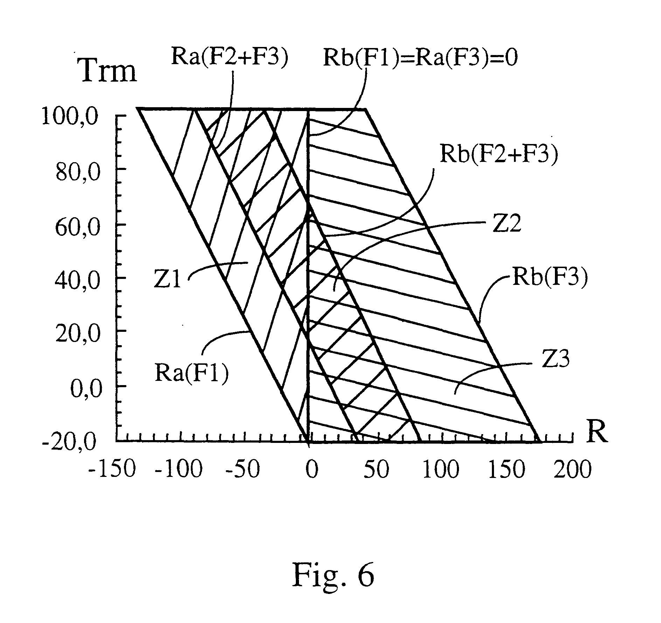

où Pa est la pression des éventuels gaz incondensables dans la double-enveloppe, c'est-à-dire une constante connue (pression de l'air utilisé pour la purge) et A, B, C sont les coefficients connus de la loi d'Antoine.
En prenant Q3e = Q3n, on obtient Rb et T3 pour la vapeur sèche à l'aide des équations (III) (IV) et (V).
On compare ensuite en 53 la valeur du signal R à la borne inférieure Ra de l'intervalle [Ra, Rb]. Si cette valeur R est supérieure à la borne inférieure Ra, on ne modifie pas la sélection de fluide thermique.
Dans le cas où le signal R représente le flux thermique, on calcule en 54 le débit Q3e de façon itérative en fonction de cette valeur de R à partir des bilans thermiques et des coefficients d'échange thermique de l'installation (équations (III), (IV) et (V)). On ajuste ensuite à la prochaine période d'échantillonnage le débit Q3e de vapeur introduit dans la bouche d'alimentation supérieure 18 en agissant sur la vanne proportionnelle 4, en fonction du calcul précédent.
Si au contraire, la valeur du signal de commande R est inférieure à la borne inférieure Ra, il est nécessaire de modifier la sélection de fluide(s) thermique(s) utilisé(s), de façon à former un fluide de contrôle Fc plus froid. Pour ce faire, on passe à l'étape 40 de sélection du mélange d'eau et de vapeur en introduisant un débit Q2e d'eau à température ambiante par ouverture des vannes 12 et 1. On revient ensuite à l'étape 41 et aux étapes subséquentes du procédé préalablement décrites en référence à la figure 2a. Pour ce faire, on ferme la vanne 4 et on ouvre les vannes 1, 12 et 2 comme indiqué précédemment.
Il est à noter que lorsque le circuit de contrôle thermique 17 est alimenté uniquement en gaz, notamment en vapeur, (mais aussi en air comprimé), le fluide de contrôle Fc gazeux circule depuis la bouche supérieure 18 vers la bouche inférieure 19. Au contraire, lorsque le fluide de contrôle Fc est liquide, notamment lorsqu'il est constitué du mélange d'eau et de vapeur, il est introduit dans la bouche inférieure 19 et évacué par la bouche supérieure 18, c'est-à-dire en sens contraire. Le fluide de contrôle à l'état gazeux circule dans le circuit 17 à contre-courant du fluide de contrôle Fc à l'état liquide, ce qui améliore la dynamique du procédé.
Lorsque de l'eau glycolée ou de la saumure (fluide F1 froid) circule dans le circuit de contrôle thermique 17, par exemple à la suite de l'étape 51, le procédé suivi est celui représenté à la figure 2c. On effectue encore les étapes 41 à 45 permettant d'élaborer la valeur du signal de commande R et les valeurs des bornes inférieure et supérieure de l'intervalle [Ra, Rb], à partir des équations (I) et (II).
La valeur Ra inférieure correspond au flux thermique véhiculé par le débit nominal Q1n maximum d'eau glycolée où le fluide de contrôle Fc véhicule le plus de puissance frigorifique. La valeur Rb supérieure est nulle et correspond au flux thermique d'un débit nul d'eau glycolée.
On compare ensuite en 55 la valeur du signal R à la borne supérieure Rb de l'intervalle [Ra, Rb].
Tant que le signal de commande R reste inférieur à cette borne supérieure Rb, on calcule en 56 le débit Q1e d'eau glycolée à introduire dans le circuit de contrôle thermique 17 et on ajuste ce débit à la prochaine période d'échantillonnage en réglant l'ouverture de la vanne proportionnelle 3 d'alimentation en eau glycolée. Dans le cas où le signal R représente un flux thermique, on calcule le débit Q1e d'eau glycolée (ou saumure) à introduire dans le circuit 17 de façon itérative à partir des bilans thermiques et des coefficients d'échange thermique de l'installation ( équations (I) et (II) ).
Si au contraire, le signal de commande R devient supérieur à la borne supérieure Rb, on réalise une nouvelle étape de purge 57 à l'air comprimé, puis on introduit de l'eau à température ambiante lors de l'étape 40 subséquente en ouvrant les vannes d'alimentation en eau 12 et 1. Le procédé suit ensuite les étapes représentées à la figure 2a.
Le dispositif informatique 22 est programmé de façon appropriée pour réaliser l'ensemble de ces étapes.
Avantageusement, on calcule à chaque période d'échantillonnage les valeurs Ra et Rb limites correspondant à chaque sélection possible en fonction de Trm, c'est-à-dire Ra (F1), Rb (F1), Ra (F2+F3), Rb (F2+F3), Ra (F3) et Rb (F3). En effet, il est à noter qu'à chaque valeur de la température du milieu réactionnel Trm, on peut calculer les flux thermiques minimum et maximum pouvant être échangés pour toutes les sélections possibles. La figure 6 donne un exemple de courbes illustrant le résultat de ces calculs. Sur la figure 6, l'ordonnée est la température Trm du milieu en °C et l'abscisse est le flux thermique en Watts (c'est-à-dire la valeur de R). La plage Z1 correspond à la sélection eau glycolée et est limitée par les droites représentant Ra (F1) et Rb (F1) = 0 ; la plage Z3 correspond à la vapeur seule et est limitée par les droites Ra (F3) = 0 et Rb (F3) ; la plage Z2 comprise entre les droites Ra (F2+F3) et Rb (F2+F3) correspond au mélange eau + vapeur et chevauche à gauche la plage Z1 et à droite la plage Z3. Dans la plage Z2, ou plus généralement lorsque plusieurs sélections correspondent au couple Trm, R, on privilégie la sélection active en cours, c'est-à-dire que l'on ne change pas la sélection.

Le tableau 1 suivant donne l'état des vannes 1 à 13 dans les différents modes de fonctionnement du manifold 20 rencontrés au cours du procédé selon l'invention. Les vannes sont identifiées par leurs références numériques représentées sur les figures.

TABLEAU 1

| Vannes | Type | Action | Sélection en cours | | | | |
|---|---|---|---|---|---|---|---|
| | | | I | II | III | IV | V |
| 1 | Proportionnelle | Débit eau | X | − | − | − | − |
| 2 | Proportionnelle | Débit vapeur pour le mélange à l'eau | X | − | − | − | − |
| 3 | Proportionnelle | Débit eau glycolée | − | − | X | − | − |
| 4 | Proportionnelle | Débit vapeur seule | − | X | − | − | − |
| 5 | Tout ou rien | Sortie vers égout | X | X | − | − | X |
| 6 | Tout ou rien | Sortie eau glycolée vers évacuation | − | − | X | X | − |
| 7 | Tout ou rien | Canalisation évacuation vers égout | − | X | − | XX | X |
| 8 | Tout ou rien | Evacuation eau glycolée | − | − | X | XX | − |
| 9 | Tout ou rien | Entrée air comprimé | − | − | − | X | X |
| 10 | Tout ou rien | Entrée vapeur | X | X | − | − | − |
| 11 | Tout ou rien | Entrée eau glycolée | − | − | X | − | − |
| 12 | Tout ou rien | Entrée eau | X | − | − | − | − |
| 13 | Tout ou rien | Sortie eau vers égout | X | − | − | − | − |

```
   -   : Vanne fermée

   X   : Vanne ouverte

   xx  : Ouverture de la vanne temporisée

   I   : Alimentation en eau et vapeur

   II  : Alimentation en vapeur seule

   III : Alimentation en eau glycolée

   IV  : Purge de l'eau glycolée (étape 57)

   V   : Purge de l'eau (étape 50)
```

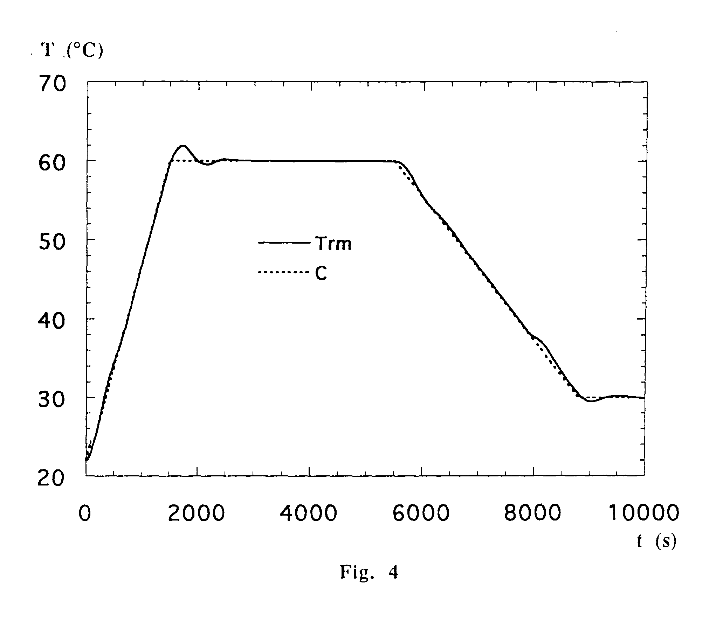

La figure 4 est un diagramme illustrant un exemple de profil de température Tr obtenu par simulation dans un procédé selon l'invention. Sur cette figure, la courbe en pointillés représente le profil de consigne C de la température Tr souhaitée au cours du temps. La courbe en trait plein représente le profil de la température mesurée Trm du milieu réactionnel qui a pu être obtenu par un modèle de simulation de réacteur discontinu tel que celui décrit dans la publication "A General Simulation Model Of Batch Chemical Reactors For Thermal Control Investigations", Michel CABASSUD, Marie-Véronique LE LANN, Boaz ETTEDGUI and Gilbert CASAMATTA, Chem. Eng. Technol. 17 (1994) 255-268. Le modèle décrit dans cette publication pour un procédé multi-fluide a cependant été adapté à un procédé conforme à l'invention.

Le profil de température est donc formé dans cet exemple d'une montée linéaire jusqu'à 60° C en 1 750 s, d'un palier à 60° C de 4 000 s, puis d'un refroidissement progressif jusqu'à 30° C en moins de 1 500 s.

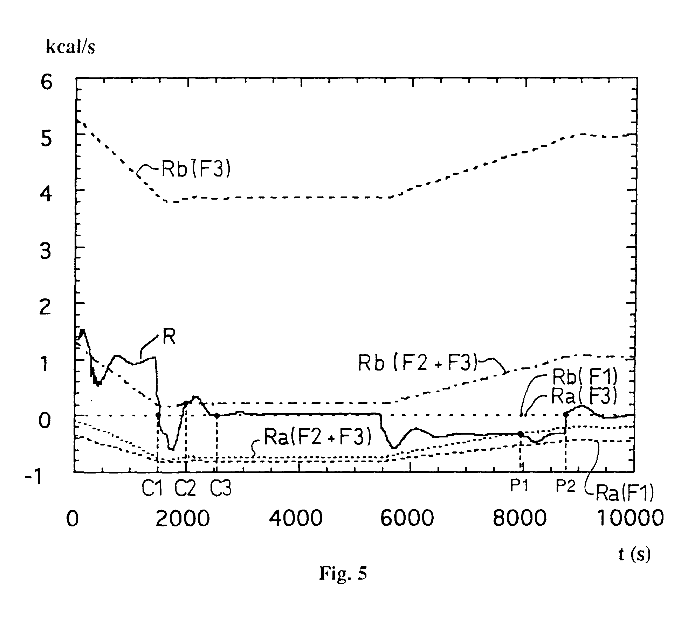

La figure 5 représente un exemple de la valeur du signal de commande R élaboré par un régulateur GPC, ainsi que les puissances calorifiques extrêmes (minimum et maximum) pouvant être obtenues respectivement avec chaque sélection de fluides thermiques, à savoir : la puissance calorifique maximum Rb(F3) du débit Q3n de vapeur seule ; la puissance calorifique maximum Rb(F2+F3) du mélange d'eau et de vapeur ; la valeur nulle correspondant aux puissances calorifiques maximum Rb(F1) de l'eau glycolée et minimum Ra(F3) de la vapeur seule ; la puissance calorifique minimum Ra(F2+F3) du mélange d'eau et de vapeur ; la puissance calorifique minimum Ra(F1) de l'eau glycolée. On constate que le procédé selon l'invention n'impose qu'un nombre minimum de changement de sélections et deux purges P1 et P2 du circuit. Au démarrage, le circuit est alimenté en vapeur seule et selon le premier mode de contrôle. En C1, le signal R passe en dessous de Ra(F3). Le procédé passe alors à la sélection du mélange eau et vapeur selon le deuxième mode de contrôle, et ce jusqu'en C2 où R devient supérieur à Rb(F2+F3) et où l'on repasse à la sélection de vapeur seule. En C3, le signal R devient à nouveau inférieur à Ra(F3) et on passe à nouveau au mélange eau et vapeur. En P1, le signal R devient inférieur à Ra(F2+F3) de sorte que l'on passe à l'eau glycolée et au premier mode de contrôle, et ce jusqu'en P2 où R devient supérieur à Rb(F1).

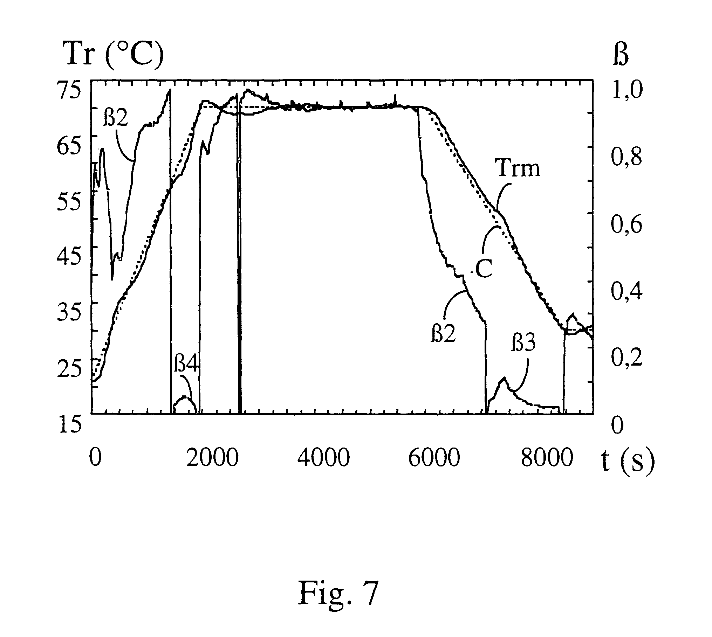

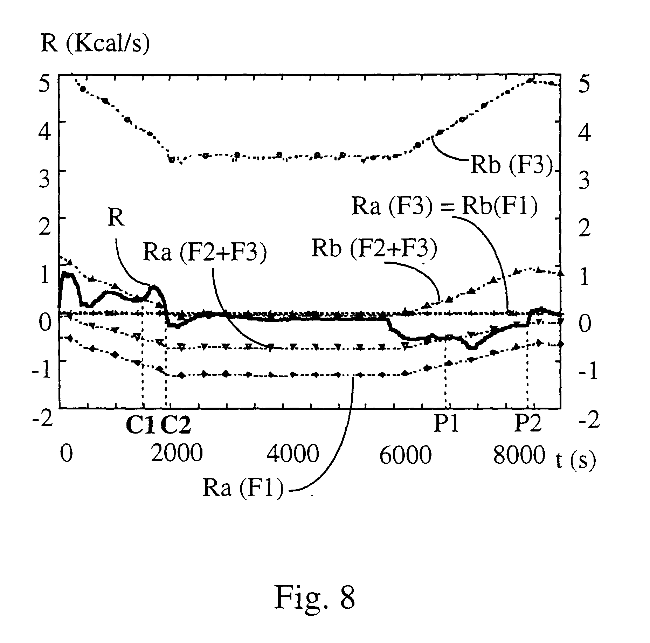

Les figures 7 et 8 sont similaires aux figures 4 et 5 mais expriment des résultats obtenus expérimentalement avec un réacteur de 16 1 et un palier de température à 70°C sans réaction chimique dans le réacteur. Comme on le voit, la courbe de la température mesurée Trm suit de près le profil de consigne C. Sur la figure 7, on a aussi tracé la courbe représentant le signal d'ajustement β fournit au manifold 20 par le dispositif informatique 22 et la carte de commande 21, sous la forme du taux d'ouverture β d'une vanne (taux d'ouverture β2 de la vanne 2 réglant le débit Q3e de vapeur mélangé à l'eau pour la sélection eau+vapeur ; taux d'ouverture β4 de la vanne 4 réglant le débit Q3e de vapeur pour la sélection vapeur seule ; taux d'ouverture β3 de la vanne 3 réglant le débit Q1e d'eau glycolée pour la sélection eau glycolée).

Sur la figure 8, on note en C1 un passage à la sélection vapeur seule, en C2 un retour à la sélection eau + vapeur, en P1 une purge et un passage à la sélection eau glycolée et en P2 une purge et un retour à la sélection eau + vapeur. La sélection eau + vapeur est utilisée pendant la majeure partie du temps et le nombre de purges est minimisé.

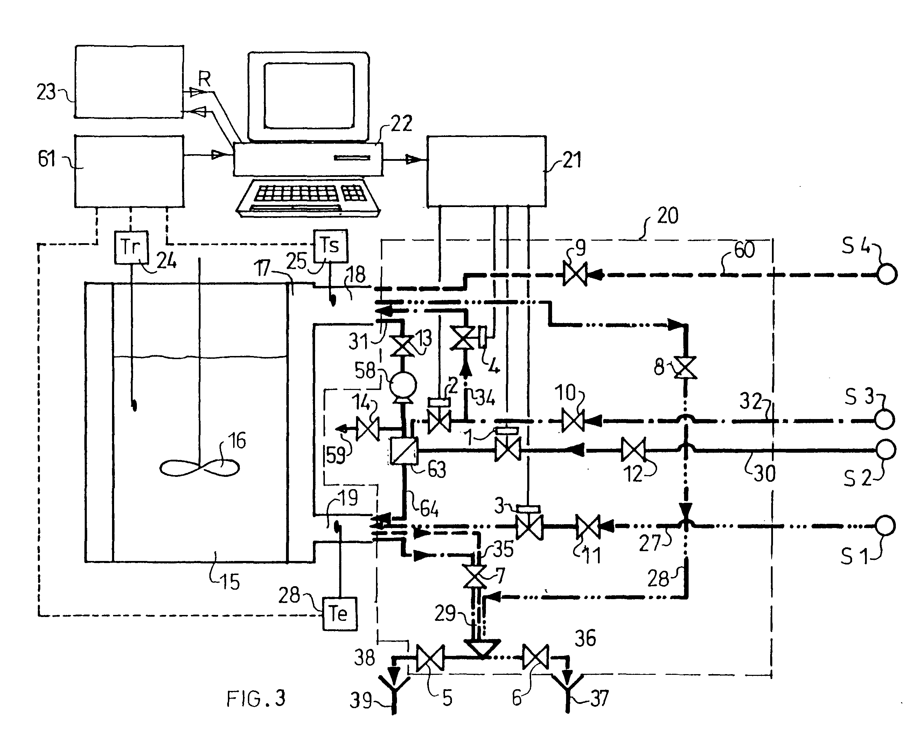

La figure 3 représente une autre variante d'un dispositif selon l'invention dans laquelle le fluide Fc circulant dans le circuit de contrôle thermique 17 est au moins partiellement recyclé. Le dispositif de la figure 3 diffère de celui de la figure 1 par le fait que la conduite d'évacuation 31 de l'eau à température ambiante à partir de la bouche supérieure 18 n'est plus connectée à la conduite d'évacuation commune 29 mais est reliée par l'intermédiaire de la vanne tout ou rien 13 et d'une pompe 58 au mélangeur 63, immédiatement en amont de la bouche inférieure 19 de façon à recycler le fluide thermique Fc. Une conduite d'évacuation 59 est connectée à l'aval de la pompe 58 et comprend une vanne 14 de purge ou un purgeur permettant de stabiliser le débit du fluide thermique Fc en compensant le débit de fluide thermique (eau ou vapeur) introduit dans le circuit pour ajuster la température. Cette conduite 59 est reliée à l'égout 39. Le procédé mis en oeuvre dans ce dispositif est identique à celui préalablement décrit dans la première variante à l'exception de l'étape 48 qui est supprimée et de l'étape 49 qui est modifiée. En effet, on ajuste alors le débit Q3e de vapeur et/ou le débit Q2e de l'eau à température ambiante à l'entrée du circuit de contrôle thermique 17 selon que l'on souhaite réchauffer ou refroidir le fluide de contrôle Fc circulant dans le circuit.

Les valeurs des débits Q2e et Q3e sont calculées par le dispositif informatique 22 en fonction de la différence entre la température Te à obtenir, déterminée par calcul à partir du signal de commande R, de la température Tsm du fluide de contrôle Fc mesurée en sortie à la bouche d'évacuation 18 par la sonde thermique 25 et de la température Trm du milieu réactionnel (équations (I) et (II)).

Le tableau 2 ci-après est un tableau similaire au tableau 1 correspondant à cette deuxième variante de l'invention.

| Vannes | Type | Action | Sélection en cours | | | | |
|--------|------|--------|:---:|:---:|:---:|:---:|:---:|
| | | | I | II | III | IV | V |
| 1 | Proportionnelle | Débit eau | X | — | — | — | — |
| 2 | Proportionnelle | Débit vapeur pour le mélange à l'eau | X | — | — | — | — |
| 3 | Proportionnelle | Débit eau glycolée | — | — | X | — | — |
| 4 | Proportionnelle | Débit vapeur | — | X | — | — | — |
| 5 | Tout ou rien | Sortie vers égout | — | X | — | — | X |
| 6 | Tout ou rien | Sortie eau glycolée vers évacuation | — | — | X | X | — |
| 7 | Tout ou rien | Canalisation évacuation vers égout | — | X | — | xx | X |
| 8 | Tout ou rien | Evacuation eau glycolée | — | — | X | xx | — |
| 9 | Tout ou rien | Entrée air comprimé | — | — | — | X | X |
| 10 | Tout ou rien | Entrée vapeur | X | X | — | — | — |
| 11 | Tout ou rien | Entrée eau glycolée | — | — | X | — | — |
| 12 | Tout ou rien | Entrée eau | X | — | — | — | — |
| 13 | Tout ou rien | Réticulation | X | — | — | — | — |
| 14 | Tout ou rien | Sortie eau (purge) vers égout | xx | — | — | — | — |

EP 0 814 902 B1

```
-   : Vanne fermée
X   : Vanne ouverte
xx  : Ouverture de la vanne temporisée
I   : Alimentation en eau et vapeur
II  : Alimentation en vapeur seule
III : Alimentation en eau glycolée
IV  : Purge de l'eau glycolée (étape 57)
V   : Purge de l'eau (étape 50)
```

La vanne 14 de purgeur ou le purgeur permet de maintenir le débit Ql de la phase liquide dans le circuit de contrôle thermique 17 au moins sensiblement constant en évacuant hors de ce circuit un débit Qls de liquide correspondant au débit du liquide introduit par le débit Q2e d'eau et/ou Q3e de vapeur à l'entrée du circuit de contrôle thermique 17.

Cette variante avec recyclage du fluide de contrôle Fc permet de réaliser des économies d'énergie substantielles.

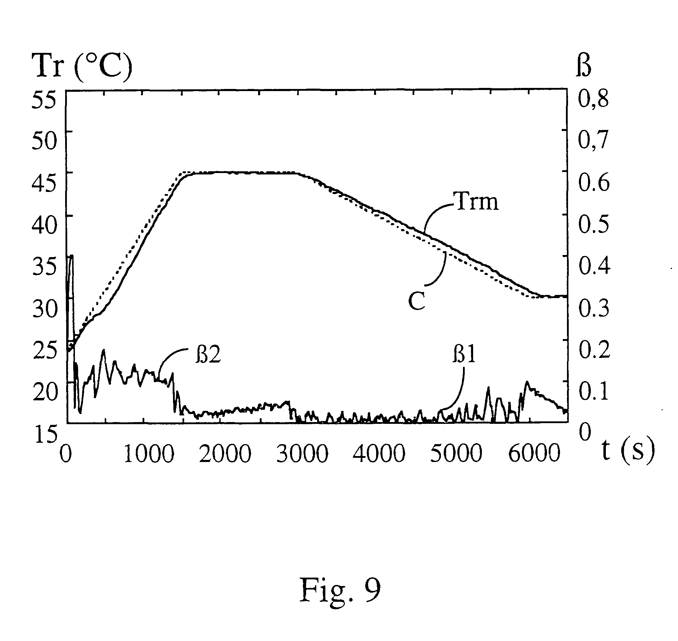

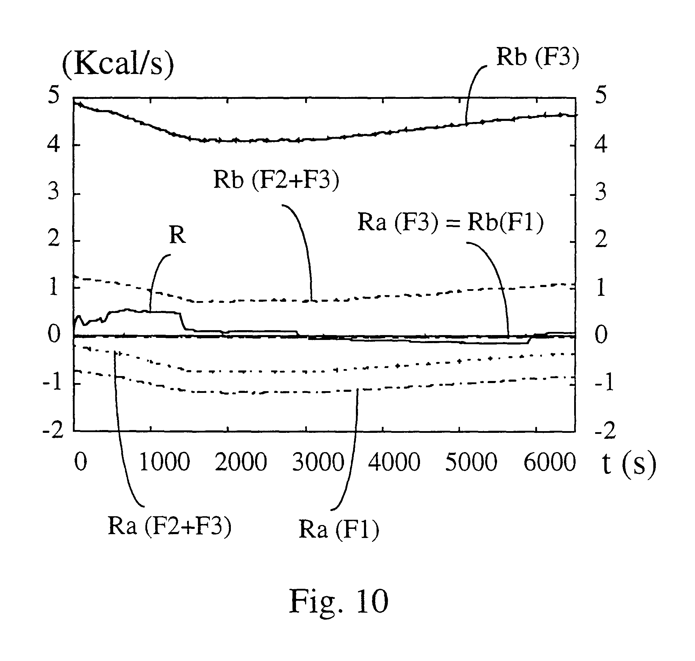

Les figures 9 et 10 sont similaires aux figures 7 et 8 mais expriment des résultats obtenus expérimentalement avec un dispositif selon la deuxième variante de l'invention (recyclage) avec un réacteur de 16 1 et un palier de température à 45°C sans réaction chimique dans le réacteur. Sur la figure 9, le signal d'ajustement $\beta$ fourni au manifold 20 par le dispositif informatique 22 et la carte de commande 21 est le taux d'ouverture $\beta2$ de la vanne 2 réglant le débit Q3e de vapeur mélangé à l'eau lorsque R>0, et le taux d'ouverture $\beta1$ de la vanne 1 réglant le débit Q2e d'eau lorsque R<0. Comme on le voit, la sélection eau + vapeur est utilisée pendant tout le procédé et aucune purge n'est nécessaire. En outre, les valeurs de $\beta2$ et $\beta1$ restent faibles.

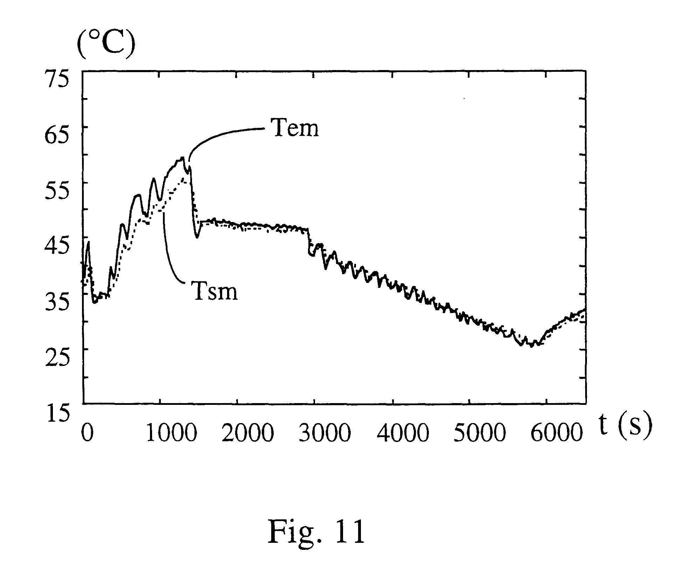

La figure 11 représente l'allure des courbes des variations au cours du temps des températures Tem d'entrée et Tsm de sortie du mélange (fluide de contrôle) telles que mesurées. La différence entre Ts et Te dépend de l'échange thermique qui a eu lieu avec le milieu réactionnel.

D'autres variantes de l'invention sont possibles. En particulier, on peut utiliser une sélection d'un mélange d'un fluide froid F1 et d'un fluide tiède F2, selon le deuxième mode de contrôle, à la place ou en plus de la sélection du mélange d'eau (F2) et de vapeur (F3), dans les applications où un fluide froid F1 et un fluide tiède F2 sont disponibles à moindre coût sur le site. Dans le cas où le fluide froid F1 est de l'eau glycolée, dont le prix est élevé, on évite cependant de mélanger ce fluide aux autres fluides F1 et/ou F3.

Le choix des composants des dispositifs décrits et représentés et la programmation du dispositif informatique 22, qui n'est qu'un simple micro-ordinateur, peuvent être effectués selon les applications de façon traditionnelle, notamment à partir des algorithmes décrits dans les publications sus-mentionnées.

**Revendications**

**1.** Procédé de contrôle thermique d'un réacteur discontinu polyvalent dans lequel :

- on utilise une pluralité de sources Si de fluides thermiques Fi dont deux au moins sont distincts, chaque source Si étant apte à délivrer un fluide thermique Fi à une température Ti et selon un débit nominal Qin prédéterminés,
- on mesure la température Trm du milieu réactionnel à l'intérieur du réacteur (15),
- on élabore en temps réel la valeur d'un signal de commande R, en fonction au moins de la température mesurée Trm et d'un signal de consigne C pour la température Tr du milieu réactionnel dont la valeur et l'évolution sont prédéterminées,
- on sélectionne, en temps réel, en fonctionnement, et en fonction de la valeur du signal de commande R, un fluide thermique Fi ou un mélange de fluides thermiques Fi pour former un fluide de contrôle Fc, et on fait circuler le fluide de contrôle Fc ainsi formé dans un circuit de contrôle thermique (17) disposé au contact du réacteur (15) ou du milieu réactionnel dans le réacteur,
- pour chaque sélection de fluide(s) thermique(s) Fi constituant le fluide de contrôle Fc, on détermine en temps réel en fonction de la(des) température(s) Ti et du(des) débit(s) nominal(aux) Qin du(des) fluide(s) thermique(s) Fi, une borne inférieure Ra et/ou une borne supérieure Rb de valeur du signal de commande R au-dessus et/ou respectivement en-dessous de laquelle le fluide de contrôle Fc peut être constitué du(des) même(s) fluide(s) thermique(s), et on ne change la sélection du(des) fluide(s) thermique(s) Fi constituant le fluide de contrôle Fc, que lorsque le signal de commande R devient inférieur et/ou respectivement supérieur à la borne inférieure Ra et/ou supérieure Rb, pour obtenir la puissance calorifique correspondante, et à condition que celle-ci puisse être obtenue à partir d'une sélection différente de(s) fluide(s) thermique(s) Fi,

- pour au moins une première sélection d'un fluide thermique Fi ou d'un mélange de fluides thermiques Fi formant le fluide de contrôle Fc, on ajuste la puissance calorifique du fluide de contrôle Fc à l'entrée du circuit de contrôle thermique (17) selon un premier mode de contrôle dans lequel on ajuste automatiquement en temps réel, en fonction de la valeur du signal de commande R, le débit du fluide de contrôle Fc dans le circuit de contrôle thermique,

- pour au moins une deuxième sélection, distincte de la première sélection, d'un fluide thermique Fi ou d'un mélange de fluides thermiques Fi formant le fluide de contrôle Fc, on ajuste la puissance calorifique du fluide de contrôle à l'entrée du circuit de contrôle thermique selon un deuxième mode de contrôle pour lequel le fluide de contrôle Fc est à l'état liquide et dans lequel :

    . on maintient le débit du fluide de contrôle Fc dans le circuit de contrôle thermique supérieur à une valeur prédéterminée,
    . on ajuste automatiquement en temps réel et en fonction de la valeur du signal de commanda R, la température Te du fluide de contrôle Fc à l'entrée du circuit de contrôle thermique (17),

- pour ajuster automatiquement la puissance calorifique du fluide de contrôle Fc, on consiaère le signal de commande R élaboré comme représentatif soit de l'ouverture d'une vanne (1, 2, 3) de contrôle du débit du fluiàe de contrôle Fc et/ou d'un fluide thermique Fj permettant d'ajuster la température Te du fluide de contrôle Fc, soit du flux thermique qu'il est nécessaire d'échanger entre le milieu réactionnel et le fluide de contrôle Fc pour respecter le signal de consigne C de la température Tr du milieu réactionnel,

de sorte que la valeur du signal de commande R est utilisée pour choisir la sélecticn du fluide thermique Fi ou du mélange de fluides thermiques Fi formant le fluide de contrôle Fc et pour ajuster la puissance calorifique du fluide de contrôle Fc à l'entrée du circuit de contrôle thermique (17) selon l'un desdits premier et deuxième modes de contrôle.

2. Procédé selon la revendication 1,
**caractérisé en ce qu'**on active le premier mode de contrôle lorsqu'on sélectionne un seul fluide thermique Fi constituant le fluide de contrôle Fc.

3. Procédé selon l'une des revendications 1 et 2, **caractérisé en ce qu'**on active le deuxième mode de contrôle lorsqu'on sélectionne un mélange de plusieurs fluides thermiques Fi de températures Ti distinctes constituant ou pouvant constituer le fluide de contrôle Fc, et en ce qu'on ajuste la température Te du fluide de contrôle Fc à l'entrée du circuit de contrôle thermique (17) en ajustant le débit d'au moins l'un des fluides thermiques Fj constituant le mélange, le débit d'au moins un autre fluide thermique Fi à l'état liquide étant maintenu supérieur à une valeur prédéterminée.

4. Procédé selon l'une des revendications 1 à 3, **caractérisé en ce qu'**on sélectionne en temps réel et fonctionnement le(les) fluide(s) thermique(s) Fi constituant le fluide de contrôle Fc en fonction du signal de commande R de façon à minimiser le nombre de changements de fluide(s) thermique(s) Fi au cours du procédé.

5. Procédé selon l'une des revendications 1 à 4, **caractérisé en ce qu'**on élabore le signal de commande R à l'aide de moyens (23) formant régulateur aptes à élaborer en temps réel un signal électrique de régulation, et en ce qu'on utilise directement ce signal électrique de régulation à titre de signal de commande R.

6. Procédé selon la revendication 5,
**caractérisé en ce que** :

- on mesure la température Trm régnant à l'intérieur du réacteur (15), la température Tem du fluide de contrôle Fc à l'entrée (19) du circuit de contrôle thermique (17), la température Tsm du fluide de contrôle Fc à la sortie (18) du circuit de contrôle thermique (17),
- on fournit les valeurs mesurées de ces températures Trm, Tem, Tsm à des moyens (23) formant régulateur aptes à élaborer en temps réel un signal électrique de régulation dont la valeur dépend du signal de consigne C qu'il reçoit, desdites valeurs mesurées, et de l'évolution de ces valeurs au cours du temps,

- et en ce qu'on utilise directement le signal électrique de régulation élaboré par les moyens (23) forment régulateur à titre de signal de commande R.

**7.** Procédé selon l'une des revendications 1 à 6, **caractérisé en ce que** ledit groupe de sélections distinctes comprend au moins les trois sélections distinctes suivantes :

- un fluide thermique F1 froid uniquement,
- un fluide thermique F3 chaud uniquement,
- un fluide thermique F2 tiède liquide de débit constant mélangé à un débit a justable d'au mcins un autre fluide thermique Fj de température Tj distincte de celle T2 du fluide thermique F2 tiède, de sorte que la température Te du fluide de contrôle Fc est ajustée selon le deuxième mode de contrôler par ajustement du débit utilisé du fluide thermique Fj.

**8.** Procédé selon la revendication 7,
**caractérisé en ce qu'**on utilise le fluide thermique F3 chaud et/ou le fluide thermique F1 froid mélangé au fluide thermique F2 tiède.

**9.** Procédé selon l'une des revendications 7 et 8, **caractérisé en ce que** le fluide thermique F2 tiède est un liquide au moins principalement constitué d'eau liquide et en ce qu'on utilise de la vapeur d'eau à titre de fluide thermique Fj mélangé au fluide thermique F2 tiède.

**10.** Procédé selon l'une des revendications 1 à 9, **caractérisé en ce qu'**on évacue hors du circuit de contrôle thermique (17) la totalité du fluide de contrôle Fc à la sortie du circuit de contrôle thermique (17).

**11.** Procédé selon l'une des revendications 1 à 10, **caractérisé en ce qu'**on recycle au moins partiellement un débit Qr de fluide de contrôle Fc.

**12.** Dispositif de contrôle thermique d'un réacteur discontinu polyvalent tel qu'un réacteur destiné à l'industrie de la chimie fine, de synthèse ou de transformation de produits pharmaceutiques, cosmétiques, colorants, polymères, ..., à partir d'une pluralité de sources Si de fluides thermiques Fi dont deux au moins sont distincts, chaque source Si étant apte à délivrer un fluide thermique Fi à une température Ti et selon un débit nominal Qin prédéterminés, ce dispositif comprenant :

- des moyens (20) de sélection en temps réel et en fonctionnement d'un fluide thermique Fi ou d'un mélange de fluide(s) thermique(s) Fi pour former un fluide de contrôle Fc, selon une sélection choisie dans un groupe de sélections distinctes,
- des moyens (20) adaptés pour faire circuler le fluide de contrôle Fc dans un circuit de contrôle thermique (17) disposé au contact du réacteur (15) ou du milieu réactionnel dans le réacteur (15),
- des moyens (24) de mesure de la température Trm du milieu réactionnel à l'intérieur du réacteur (15),
- des moyens (20, 21) d'ajustement de la puissance calorifique du fluide de contrôle Fc à l'entrée du circuit de contrôle thermique (17), en fonction au moins de la température mesurée Trm et d'un signal de consigne C pour la température Tr du milieu réactionnel dont la valeur et l'évolution sont prédéterminées,

**caractérisé en ce qu'**il comporte :

- des moyens (23) adaptés pour élaborer en temps réel un signal de commande R au moins en fonction du signal de consigne C et de la température mesurée Trm du milieu réactionnel,
- des moyens (22, 23) de détermination en temps réel et en fonctionnement, en fonction de la valeur du signal de commande R :

  . d'une sélection de fluide(s) thermique(s) circulant dans le circuit de contrôle thermique (17) pour former le fluide de contrôle Fc,
  . d'un mode de contrôle thermique parmi :

    (i) un premier mode de contrôle dans lequel on ajuste en temps réel le débit au fluide de contrôle Fc dans le circuit de contrôle thermique (17) en fonction de la valeur du signal de commande R,
    (ii) un deuxième mode de contrôle pour lequel le fluide de contrôle Fc est à l'état liquide, et dans lequel on maintient le débit du fluide de contrôle Fc supérieur à une valeur prédéterminée et on ajuste

**EP 0 814 902 B1**

en temps réel sa température Te du fluide de contrôle Fc à l'entrée du circuit de contrôle thermique (17) en fonction de la valeur du signal de commande R, en ce que les moyens (22, 23) de détermination comportent des moyens (22) informatiques de calcul programmés pour déterminer en temps réel, en fonction de la(des) température(s) Ti et du(des) débit(s) nominal(aux) Qin du(des) fluide(s) thermique (s) Fi, une borne inférieure Ra et/ou une borne supérieure Rb de valeur du signal de commande R au-dessus et/ou respectivement en-dessous de laquelle le fluide de contrôle Fc peut être constitué du(des) même(s) fluide(s) thermique(s) Fi,

et an ce que les moyens (20, 21) d'ajustement de la puissance calorifique du fluide de contrôle Fc à l'entrée du circuit de contrôle thermique (17) sont adaptés pour ajuster automatiquement en temps réel la puissance calorifique selon le premier mode de contrôle pour au moins une première sélection, et selon le deuxième mode de contrôle pour au moins une deuxième sélection distincte de la première sélection.

**13.** Dispositif selon la revendication 12,
**caractérisé en ce que** les moyens (22, 23) de détermination comportent des moyens (23) formant régulateur adaptés pour élaborer en temps réel un signal électrique de commande R dont la valeur dépend d'un signal de consigne C pour la température Tr du milieu réactionnel, dont la valeur et l'évolution sont prédéterminées, et d'au moins la valeur mesurée Trm de la température du milieu réactionnel et de l'évolution de cette valeur au cours du temps.

**14.** Dispositif selon la revendication 13,
**caractérisé en ce qu'**il comprend en outre :

- des moyens (26) de mesure de la température Tem du fluide de contrôle Fc à l'entrée (19) du circuit de contrôle thermique (17),
- des moyens (25) de mesure de la température Tsm du fluide de contrôle Fc à la sortie (18) du circuit de contrôle thermique (17),

et en ce que les moyens (23) formant régulateur sont adaptés pour élaborer en temps réel le signal de commande R en fonction du signal de consigne C, des valeurs mesurées Trm, Tem, Tsm délivrées par les moyens (24, 25, 26) de mesure et de l'évolution de ces valeurs au cours du temps.

**15.** Dispositif selon l'une des revendications 12 à 14, **caractérisé en ce qu'**il comporte un manifold (20) interposé entre les sources Si et le circuit de contrôle thermique (17), ce manifold (20) comprenant pour chaque source Si, au moins une vanne (1 à 4) de réglage proportionnel du débit Qie de fluide thermique Fi introduit dans le circuit de contrôle thermique (17) entre une valeur nulle et la valeur maximum correspondant au débit nominal Qin du fluide thermique Fi délivré par la source Si.

**16.** Dispositif selon l'une des revendications 12 à 15, **caractérisé en ce que** les moyens (22, 23) de détermination sont adaptés pour élaborer un signal a'ajuseement d'ouverture de chaque vanne (1 à 14) du manifold (20) en fonction de la valeur du signal de commande R élaborée par les moyens (23) formant régulateur.

**Patentansprüche**

**1.** Verfahren zur Wärmeregelung eines Chargen-Mehrzweckreaktors, umfassend die folgenden Schritte:

- Verwenden einer Mehrzahl von Quellen Si von Wärmetransportfluiden Fi, von denen wenigstens zwei verschieden sind, wobei jede Quelle Si die Aufgabe hat, ein Wärmetransportfluid Fi mit einer Temperatur Ti und mit einem vorbestimmten Nenndurchfluss Qin zuzuführen,
- Messen der Temperatur Trm der Reaktionsumgebung im Inneren des Reaktors (15),
- Errechnen des Wertes eines Steuersignals R in Echtzeit in Abhängigkeit von wenigstens der gemessenen Temperatur Trm und eines Einstellsignals C für die Temperatur Tr der Reaktionsumgebung, deren Wert und Entwicklung vorbestimmt sind,
- Auswählen, in Echtzeit, im Betrieb und in Abhängigkeit vom Wert des Steuersignals R, eines Wärmetransportfluids Fi oder eines Gemisches von Wärmetransportfluiden Fi zur Bildung eines Regelfluids Fc, und Zirkulieren des so gebildeten Regelfluids Fc in einem Wärmeregelkreis (17) in Kontakt mit dem Reaktor (15) oder mit der Reaktionsumgebung in dem Reaktor,

- Bestimmen, für jedes Auswählen eines (von) das Regelfluid Fc bildenden Wärmetransportfluids/en Fi, in Echtzeit und in Abhängigkeit von der/den Temperatur(en) Ti und vom (jeweiligen) Nenndurchfluss Qin des/der Wärmetransportfluids/e Fi, einer Untergrenze Ra und/oder einer Obergrenze Rb des Wertes des Steuersignals R oberhalb bzw. unterhalb derer das Regelfluid Fc von dem-/denselben Wärmetransportfluid(en) gebildet werden kann, wobei die Wahl des/der das Regelfluid Fc bildenden Wärmetransportfluids/e Fi erst dann geändert wird, wenn das Steuersignal R kleiner bzw. größer wird als die Untergrenze Ra bzw. die Obergrenze Rb, um die entsprechende Wärmeleistung zu erzielen, und unter der Bedingung, dass diese mit einer anderen Wahl eines/von Wärmetransportfluids/en Fi erzielt werden kann,

- Einstellen, für wenigstens eine erste Wahl eines Wärmetransportfluids Fi oder eines Gemischs von Wärmetransportfluiden Fi, die das Regelfluid Fc bilden, der Wärmeleistung des Regelfluids Fc am Eingang des Wärmeregelkreises (17) gemäß einem ersten Regelmodus, in dem automatisch in Echtzeit und in Abhängigkeit vom Wert des Steuersignals R der Durchfluss von Regelfluid Fc im Wärmeregelkreis eingestellt wird,

- Einstellen, für wenigstens eine zweite Wahl, die sich von der ersten Wahl unterscheidet, eines Wärmetransportfluids Fi oder eines Gemischs von Wärmetransportfluiden Fi, die das Regelfluid Fc bilden, der Wärmeleistung des Regelfluids am Eingang des Wärmeregelkreises gemäß einem zweiten Regelmodus, in dem sich das Regelfluid Fc im flüssigen Zustand befindet und in dem:

  . der Durchfluss des Regelfluids Fc im Wärmeregelkreis über einem vorbestimmten Wert gehalten wird,
  . die Temperatur Te des Regelfluids Fc automatisch in Echtzeit und in Abhängigkeit vom Wert des Steuersignals R am Eingang des Wärmeregelkreises (17) eingestellt wird,

- Ansehen, zum automatischen Einstellen der Wärmeleistung des Regelfluids Fc, des errechneten Steuersignals R als repräsentativ entweder für die Öffnung eines Ventils (1, 2, 3) zum Regeln des Durchflusses des Regelfluids Fc und/oder eines Wärmetransportfluids Fj, mit dem die Temperatur Te des Regelfluids Fc eingestellt werden kann, oder für den Wärmefluss, der zwischen der Reaktionsumgebung und dem Regelfluid Fc gewechselt werden muss, um dem Einstellsignal C der Temperatur Tr der Reaktionsumgebung Folge zu leisten,

auf eine solche Weise, dass der Wert des Steuersignals R verwendet wird, um das Wärmetransportfluid Fi oder das Gemisch von Wärmetransportfluiden Fi zu wählen, die das Regelfluid Fc bilden, und um die Wärmeleistung des Regelfluids Fc am Eingang des Wärmeregelkreises (17) gemäß dem genannten ersten oder dem genannten zweiten Regelmodus einzustellen.

2. Verfahren nach Anspruch 1, **dadurch gekennzeichnet, dass** der erste Regelmodus aktiviert wird, wenn ein einziges Wärmetransportfluid Fi gewählt wird, das das Regelfluid Fc bildet.

3. Verfahren nach Anspruch 1 oder 2, **dadurch gekennzeichnet, dass** der zweite Regelmodus aktiviert wird, wenn ein Gemisch von mehreren Wärmetransportfluiden Fi mit verschiedenen Temperaturen Ti gewählt wird, die das Regelfluid Fc bilden oder bilden können, und dadurch, dass die Temperatur Te des Regelfluids Fc am Eingang des Wärmeregelkreises (17) eingestellt wird, indem der Durchfluss von wenigstens einem der das Gemisch bildenden Wärmetransportfluide Fj eingestellt wird, wobei der Durchfluss von wenigstens einem anderen Wärmetransportfluid Fi im flüssigen Zustand über einem vorbestimmten Wert gehalten wird.

4. Verfahren nach einem der Ansprüche 1 bis 3, **dadurch gekennzeichnet, dass** in Echtzeit und im Betrieb das/die Wärmetransportfluid(e) Fi, das/die das Regelfluid Fc bildet/en, in Abhängigkeit vom Steuersignal R so gewählt wird/werden, dass die Zahl der Wärmetransportfluidwechsel Fi im Laufe des Verfahrens minimal gehalten wird.

5. Verfahren nach einem der Ansprüche 1 bis 4, **dadurch gekennzeichnet, dass** das Steuersignal R mit Hilfe eines Regulators (23) erzeugt wird, der in Echtzeit ein elektrisches Regulierungssignal erzeugt, und dadurch, dass dieses elektrische Regulierungssignal direkt als Steuersignal R verwendet wird.

6. Verfahren nach Anspruch 5, **gekennzeichnet durch** die folgenden Schritte:

- Messen der im Inneren des Reaktors (15) herrschenden Temperatur Trm, der Temperatur Tem des Regelfluids Fc am Eingang (19) des Wärmeregelkreises (17), der Temperatur Tsm des Regelfluids Fc am Ausgang (18) des Wärmeregelkreises (17),
- Anlegen der Messwerte dieser Temperaturen Trm, Tem, Tsm an den Regulator (23), der in Echtzeit ein elektrisches Regulierungssignal erzeugt, dessen Wert vom Einstellsignal C, das er empfängt, von den genannten Messwerten und von der Entwicklung dieser Werte im Laufe der Zeit abhängig ist,

- und direktes Verwenden des vom Regulator (23) erzeugten elektrischen Regulierungssignals als Steuersignal R.

**7.** Verfahren nach einem der Ansprüche 1 bis 6, **dadurch gekennzeichnet, dass** die genannte Gruppe aus zur Wahl stehenden Optionen wenigstens die drei folgenden verschiedenen Optionen beinhaltet:

- ein einzelnes kaltes Wärmetransportfluid F1,
- ein einzelnes heißes Wärmetransportfluid F3,
- ein flüssiges, lauwarmes Wärmetransportfluid F2 mit konstantem Durchfluss, das mit verstellbarem Durchfluss mit wenigstens einem anderen Wärmetransportfluid Fj mit einer Temperatur Tj gemischt wird, die sich von dieser T2 des lauwarmen Wärmetransportfluids F2 unterscheidet, auf eine solche Weise, dass die Temperatur Te des Regelfluids Fc gemäß dem zweiten Regelmodus durch Einstellen des Durchflusses des Wärmetransportfluids Fj eingestellt wird.

**8.** Verfahren nach Anspruch 7, **dadurch gekennzeichnet, dass** das heiße Wärmetransportfluid F3 und/oder das kalte Wärmetransportfluid F1 im Gemisch mit dem lauwarmen Wärmetransportfluid F2 verwendet wird/werden.

**9.** Verfahren nach einem der Ansprüche 7 und 8, **dadurch gekennzeichnet, dass** das lauwarme Wärmetransportfluid F2 eine Flüssigkeit ist, die wenigstens hauptsächlich von flüssigem Wasser gebildet wird, und dadurch, dass der Dampf des Wassers als Wärmetransportfluid Fj im Gemisch mit dem lauwarmen Wärmetransportfluid F2 verwendet wird.

**10.** Verfahren nach einem der Ansprüche 1 bis 9, **dadurch gekennzeichnet, dass** die Gesamtheit des Regelfluids Fc am Ausgang des Wärmeregelkreises (17) aus dem Wärmeregelkreis (17) evakuiert wird.

**11.** Verfahren nach einem der Ansprüche 1 bis 10, **dadurch gekennzeichnet, dass** ein Durchfluss Qr des Regelfluids Fc wenigstens teilweise recycelt wird.

**12.** Vorrichtung zur Wärmeregelung eines Batch-Mehrzweckreaktors wie z.B. eines feinchemischen Industriereaktors für die Synthese oder Transformation von Pharmazeutik-, Kosmetik-, Farbstoff-, Polymerprodukten.... von einer Mehrzahl von Quellen Si von Wärmetransportfluiden Fi, von denen sich wenigstens zwei unterscheiden, wobei jede Quelle Si die Aufgabe hat, ein Wärmetransportfluid Fi mit einer Temperatur Ti und mit einem vorbestimmten Nenndurchfluss Qin zuzuführen, wobei die genannte Vorrichtung folgendes umfasst:

- Mittel (20) zum Auswählen, in Echtzeit und im Betrieb, eines Wärmetransportfluids Fi oder eines Gemischs von Wärmetransportfluiden Fi zur Bildung eines Regelfluids Fc aus einer Gruppe von verschiedenen Auswahloptionen,
- Mittel (20) zum Zirkulieren des Regelfluids Fc in einem Wärmeregelkreis (17) in Kontakt mit dem Reaktor (15) oder mit der Reaktionsumgebung in dem Reaktor (15),
- Mittel (24) zum Messen der Temperatur Trm der Reaktionsumgebung im Inneren des Reaktors (15),
- Mittel (20, 21) zum Einstellen der Wärmeleistung des Regelfluids Fc am Eingang des Wärmeregelkreises (17) in Abhängigkeit von wenigstens der gemessenen Temperatur Trm und von einem Einstellsignal C für die Temperatur Tr der Reaktionsumgebung, deren Wert und Entwicklung vorbestimmt sind,

**dadurch gekennzeichnet, dass** sie folgendes umfasst:

- Mittel (23) zum Errechnen, in Echtzeit, eines Steuersignals R wenigstens in Abhängigkeit vom Einstellsignal C und von der gemessenen Temperatur Trm der Reaktionsumgebung,
- Mittel (22, 23) zum Bestimmen, in Echtzeit und im Betrieb, in Abhängigkeit vom Wert des Steuersignals R:

  . einer Auswahl eines/von Wärmetransportfluids/en, das/die im Wärmeregelkreis (17) zirkuliert/en, um das Regelfluid Fc zu bilden,
  . eines Wärmeregelmodus aus:

      (i) einem ersten Regelmodus, in dem in Echtzeit der Durchfluss des Regelfluids Fc im Wärmeregelkreis (17) in Abhängigkeit vom Wert des Steuersignals R eingestellt wird,
      (ii) einem zweiten Regelmodus, für den sich das Regelfluid Fc im flüssigen Zustand befindet und in dem der Durchfluss des Regelfluids Fc über einem vorbestimmten Wert gehalten und die Temperatur Te des Regelfluids Fc am Eingang des Wärmeregelkreises (17) in Abhängigkeit vom Wert des Steuersignals R in Echtzeit eingestellt wird,

und dadurch, dass die Bestimmungsmittel (22, 23) numerische Rechenmittel (22) umfassen, die so programmiert sind, dass sie in Echtzeit und in Abhängigkeit von der/den Temperatur(en) Ti und vom (jeweiligen) Nenndurchfluss Qin des/der Wärmetransportfluids/e Fi eine Untergrenze Ra und/oder eine Obergrenze Rb des Wertes des Steuersignals R errechnen, oberhalb bzw. unterhalb derer das Regelfluid Fc von dem-/denselben Wärmetransportfluid (en) Fi gebildet werden kann,

und dadurch, dass die Mittel (20, 21) zum Einstellen der Wärmeleistung des Regelfluids Fc am Eingang des Wärmeregelkreises (17) die Aufgabe haben, die Wärmeleistung gemäß dem ersten Regelmodus für wenigstens eine erste Wahl und gemäß dem zweiten Regelmodus für wenigstens eine zweite, sich von der ersten Wahl unterscheidende zweite Wahl automatisch in Echtzeit einzustellen.

**13.** Vorrichtung nach Anspruch 12, **dadurch gekennzeichnet, dass** die Bestimmungsmittel (22, 23) einen Regulator (23) aufweisen, der die Aufgabe hat, in Echtzeit ein elektrisches Steuersignal R zu erzeugen, dessen Wert von einem Einstellsignal C für die Temperatur Tr der Reaktionsumgebung, dessen Wert und Entwicklung vorbestimmt sind, und wenigstens vom Messwert Trm der Temperatur der Reaktionsumgebung und der Entwicklung dieses Wertes im Laufe der Zeit abhängig ist.

**14.** Vorrichtung nach Anspruch 13, **dadurch gekennzeichnet, dass** sie ferner folgendes umfasst:

- Mittel (26) zum Messen der Temperatur Tem des Regelfluids Fc am Eingang (19) des Wärmeregelkreises (17),
- Mittel (25) zum Messen der Temperatur Tsm des Regelfluids Fc am Ausgang (18) des Wärmeregelkreises (17),

und dadurch, dass der Regulator (23) die Aufgabe hat, in Echtzeit das Steuersignal R in Abhängigkeit vom Einstellsignal C, den Messwerten Trm, Tem, Tsm, die von den Messmitteln (24, 25, 26) angelegt werden, und der Entwicklung dieser Werte im Laufe der Zeit zu ermitteln.

**15.** Vorrichtung nach einem der Ansprüche 12 bis 14, **dadurch gekennzeichnet, dass** sie einen Verteiler (20) aufweist, der sich zwischen den Quellen Si und dem Wärmeregelkreis (17) befindet, wobei der Verteiler (20) für jede Quelle Si wenigstens ein Ventil (1 bis 4) zur proportionalen Regelung des Durchflusses Qie des in den Wärmeregelkreis (17) eingeführten Wärmetransportfluids Fi zwischen einem Nullwert und dem Höchstwert aufweist, der dem Nenndurchfluss Qin des von der Quelle Si zugeführten Wärmetransportfluids Fi entspricht.

**16.** Vorrichtung nach einem der Ansprüche 12 bis 15, **dadurch gekennzeichnet, dass** die Bestimmungsmittel (22, 23) die Aufgabe haben, ein Signal zum Einstellen der Öffnung jedes Ventils (1 bis 14) des Verteilers (20) in Abhängigkeit vom Wert des Steuersignals R zu erzeugen, das von dem Regulator (23) erzeugt wurde.

## Claims

**1.** Method for thermal control of a multi-purpose discontinuous reactor, in which:

- use is made of a plurality of sources Si of thermal fluids Fi, at least two of which are distinct, each source Si being able to supply a thermal fluid Fi at a pre-determined temperature Ti, and according to a pre-determined nominal flow Qin;
- the temperature Trm of the reactive medium is measured inside the reactor (15);
- processing is carried out in real time of the value of a control signal R, according to at least the temperature measured Trm, and to an order signal C for the temperature Tr of the reactive medium, the value and development of which are pre-determined;
- selection is carried out in real time, in operation, and according to the value of the control signal R, of a thermal fluid Fi or a mixture of thermal fluids Fi, in order to form a control fluid Fc, and the control fluid Fc thus formed is circulated in a thermal control circuit (17), which is disposed in contact with the reactor (15) or with the reactive medium in the reactor;
- for each selection of thermal fluid(s) Fi constituting the control fluid Fc, there is determination in real time, according to the temperature(s) Ti and the nominal flow rate(s) Qin of the thermal fluid(s) Fi, of a lower limit Ra and/or an upper limit Rb of value of the control signal R, respectively above and/or below which the control fluid Fc can consist of the same thermal fluid(s), and the selection of the thermal fluid(s) Fi which constitute the control fluid Fc is changed only when the control signal R becomes respectively lower and/or higher than the lower limit Ra and/or higher limit Rb, in order to obtain the corresponding calorific power, and provided that the latter can be obtained from a different selection of thermal fluid(s) Fi;

- for at least one first selection of a thermal fluid Fi or of a mixture of thermal fluids Fi which form the control fluid Fc, there is adjustment of the calorific power of the control fluid Fc at the input of the thermal control circuit (17), according to a first control mode, in which there is adjustment automatically, in real time, according to the value of the control signal R, of the flow rate of control fluid Fc in the thermal control circuit;
- for at least one second selection, which is distinct from the first selection, of a thermal fluid Fi or of a mixture of thermal fluids Fi which form the control fluid Fc, there is adjustment of the calorific power of the control fluid at the input of the thermal control circuit, according to a second control mode, for which the control fluid Fc is in the liquid state, and in which:

  . the flow rate of the control fluid Fc is maintained in the upper thermal control circuit, at a pre-determined value;
  . there is automatic adjustment, in real time, and according to the value of the control signal R, of the temperature Te of the control fluid Fc at the input of the thermal control circuit (17);

- in order to adjust automatically the calorific power of the control fluid Fc, it is considered that the control signal R, processed either as representative of the opening of a valve (1, 2, 3) to control the flow rate of the control fluid Fc and/or of a thermal fluid Fj which makes it possible to adjust the temperature Te of the control fluid Fc, or as representative of the thermal flow which must be exchanged between the reactive medium and the control fluid Fc, in order to respect the order signal C for the temperature Tr of the reactive medium;

such that the value of the control signal R is used in order to choose the selection of the thermal fluid Fi or of the mixture of thermal fluids Fi which form the control fluid Fc, and in order to adjust the calorific power of the control fluid Fc at the input of the thermal control circuit (17), according to one of the said first and second control modes.

2. Method according to claim 1, **characterised in that** the first control mode is activated when a single thermal fluid Fi which constitutes the control fluid Fc is selected.

3. Method according to claim 1 or claim 2, **characterised in that** the second control mode is activated when there is selection of a mixture of a plurality of thermal fluids Fi with distinct temperatures Ti, which constitute, or can constitute, the control fluid Fc, and in that the temperature Te of the control fluid Fc is adjusted at the input of the thermal control circuit (17), by adjusting the flow rate of at least one of the thermal fluids Fj which constitute the mixture, the flow rate of at least one other thermal fluid Fi in the liquid state being maintained higher than a pre-determined value.

4. Method according to any one of claims 1 to 3, **characterised in that** there is selection, in real time, and in operation, of the thermal fluid(s) Fi which constitute(s) the control fluid Fc, according to the control signal R, such as to minimise the number of changes of thermal fluid(s) Fi during the method.

5. Method according to any one of claims 1 to 4, **characterised in that** the control signal R is processed using means (23) which form a regulator, which can process an electrical regulation signal in real time, and in that this electrical regulation signal is used directly as a control signal R.

6. Method according to claim 5, **characterised in that**:

- measurement is carried out of the temperature Trm which exists inside the reactor (15), the temperature Tem of the control fluid Fc at the input (19) of the thermal control circuit (17), and the temperature Tsm of the control fluid Fc at the output (18) of the thermal control circuit (17);
- the values measured of these temperatures Trm, Tem, Tsm are supplied to means (23) which form a regulator, which can process in real time an electrical regulation signal, the value of which depends on the order signal C which it receives, on the said values measured, and on the development of these values over a period of time; and
- the electrical regulation signal processed by the means (23) which form a regulator is used directly as a control signal R.

7. Method according to any one of claims 1 to 6, **characterised in that** the said group of distinct selections comprises at least the following three distinct selections:

- a thermal fluid F1 which is cold only,
- a thermal fluid F3 which is hot only,
- a thermal fluid F2 which is warm, with a constant flow rate, mixed with an adjustable flow rate of at least one other thermal fluid Fj, with a temperature Tj which is distinct from that T2 of the thermal fluid F2 which is warm, such that the temperature Te of the control fluid Fc is adjusted according to the second control mode, by adjustment of the flow rate used for the thermal fluid Fj.

8. Method according to claim 7, **characterised in that** the thermal fluid F3 is used hot, and/or the thermal fluid F1 is used cold, mixed with the thermal fluid F2 which is warm.

9. Method according to claim 7 or claim 8, **characterised in that** the thermal fluid F2 which is warm is a liquid which consists at least mainly of water in liquid form, and in that water vapour is used as a thermal fluid Fj, mixed with the thermal fluid F2 which is warm.

10. Method according to any one of claims 1 to 9, **characterised in that** all of the control fluid Fc is discharged outside the thermal control unit (17), at the output of the thermal control unit (17).

11. Method according to any one of claims 1 to 10, **characterised in that** a flow rate Qr of control fluid Fc is recycled at least partially.

12. Device for thermal control of a multi-purpose discontinuous reactor, such as a reactor designed for the industry for fine chemicals, synthesis or transformation of pharmaceutical, cosmetic, dye, and polymer products, etc, from a plurality of sources Si of thermal fluids Fi, at least two of which are distinct, each source Si being able to supply a thermal fluid Fi at a pre-determined temperature Ti, and according to a pre-determined nominal flow Qin, this device comprising:

- means (20) for selection in real time, and in operation, of a thermal fluid Fi or of a mixture of thermal fluids Fi, in order to form a control fluid Fc, according to a selection chosen from a group of distinct selections;
- means (20) designed to make the control fluid Fc circulate in a thermal control circuit (17), which is disposed in contact with the reactor (15), or with the reactive medium in the reactor (15);
- means (24) for measuring the temperature Trm of the reactive medium inside the reactor (15);
- means (20, 21) for adjustment of the calorific power of the control fluid Fc at the intake of the thermal control circuit (17), according to at least the temperature measured Trm and to an order signal C for the temperature Tr of the reactive medium, the value and development of which are pre-determined,

**characterised in that** it comprises:

- means (23) designed to process in real time at least one control signal R, according to the order signal C and the temperature measured Trm of the reactive medium;
- means (22, 23) for determination, in real time, and in operation, according to the value of the control signal R, of:

  . a selection of thermal fluid(s) circulating in the thermal control circuit (17), in order to form the control fluid Fc;
  . a thermal control mode from amongst:

      (i) a first control mode, in which there is adjustment in real time of the flow rate of the control fluid Fc in the thermal control circuit (17), according to the value of the control signal R;
      (ii) a second control mode, for which the control fluid Fc is in the liquid state, and in which the flow rate of the control fluid Fc is maintained higher than a pre-determined value, and there is adjustment in real time of the temperature Te of the control fluid Fc at the input of the thermal control unit (17), according to the value of the control signal R,

in that the means (22, 23) for determination comprise computer calculation means (22), which are programmed to determine in real time, according to the temperature(s) Ti and to the nominal flow rate(s) Qin of the thermal fluid (s) Fi, a lower limit Ra, and/or an upper limit Rb of value of the control signal R, respectively above and/or below which the control fluid Fc can consist of the same thermal fluid(s) Fi;

and in that the means (20, 21) for adjustment of the calorific power of the control fluid Fc at the input of the thermal control circuit (17) are designed to adjust the calorific power automatically, in real time, according to the first control mode, for at least one first selection, and according to the second control mode, for at least one second selection, which is distinct from the first selection.

13. Device according to claim 12, **characterised in that** the means (22, 23) for determination comprise means (23) forming a regulator, which are designed to process in real time an electrical control signal R, the value of which depends on an order signal C for the temperature Tr of the reactive medium, the value and development of which are pre-determined, and on at least the value measured Trm of the temperature of the reactive medium, and of the development of this value over a period of time.

14. Device according to claim 13, **characterised in that** it additionally comprises:

- means (26) for measuring the temperature Tem of the control fluid Fc at the input (19) of the thermal control circuit (17);
- means (25) for measuring the temperature Tsm of the control fluid Fc at the output (18) of the thermal control circuit (17);

and in that the means (23) which form a regulator are designed to process the control signal R in real time, according to the order signal C, to the values measured Trm, Tem, Tsm supplied by the means (24, 25, 26) for measuring, and to the development of these values over a period of time.

15. Device according to any one of claims 12 to 14, **characterised in that** it comprises a manifold (20), which is interposed between the sources Si and the thermal control circuit (17), this manifold (20) comprising, for each source Si, at least one valve (1 to 4), for proportional regulation of the flow rate Qie of thermal fluid Fi introduced into the thermal control circuit (17), between a zero value and the maximum value corresponding to the nominal flow rate Qin of the thermal fluid Fi supplied by the source Si.

16. Device according to any one of claims 12 to 15, **characterised in that** the means (22, 23) for determination are designed to process an adjustment signal for opening of each valve (1 to 14) of the manifold (20), according to the value of the control signal R processed by the means (23) which form a regulator.

FIG. 1

EP 0 814 902 B1

```
                    ( EAU+VAPEUR )─ 40

                    ┌──────────────┐
                    │     Trm      │─ 41
                    └──────────────┘

                    ┌──────────────┐     43 ─┐
                    │      R       │◄─ C ─┌──────────────┐─ 42
                    └──────────────┘      └──────────────┘

                    ┌──────────────┐      ┌──────────────┐
                    │  [Ra , Rb]   │◄────►│              │
                    └──────────────┘      └──────────────┘
                           44 ─┘               45 ─┘

                              ◇ ─ 46
                R < Ra  ╱         ╲  R > Rb
              ┌────────┘           └────────┐
    ┌──────────────┐                    ┌──────────────┐
    │    PURGE     │─ 50                │   VAPEUR     │─ 52
    └──────────────┘    R ∈ [Ra,Rb]    └──────────────┘
           │                 │                │
    ┌──────────────┐   ┌──────────────┐       ⋮
    │    EAU       │   │              │
    │  GLYCOLÉE    │─51│     Te       │─ 47
    └──────────────┘   └──────────────┘
           ⋮                 │
                       ┌──────────────┐
                       │ Q 2e > Qlmin │─ 48
                       └──────────────┘
                             │
                       ┌──────────────┐
                       │     Q 3e     │─ 49
                       └──────────────┘
```

FIG. 2a

FIG.2b

EAU GLYCOLÉE ~51

Trm ~41

R ~42    ← C    43

[Ra , Rb] ~44    ↔    ~45

55

R > R b

R < R b

PURGE ~57

Q 1e ~56

PASSAGE A EAU+VAPEUR ~40

FIG. 2c

FIG. 3

Fig. 4

Fig. 5

Fig. 6

Fig. 7

Fig. 8

Fig. 9

Fig. 10

Fig. 11